# EUROPÄISCHE PATENTSCHRIFT

(11) **EP 4 200 181 B1**
(45) Veröffentlichungstag und Bekanntmachung des Hinweises auf die Patenterteilung: **07.05.2025**
(21) Anmeldenummer: 21746703.4
(22) Anmeldetag: 20.07.2021
(51) Int. Cl.: B60W 60/00, B60W 30/02, B60W 10/04, B60W 10/184, B60W 10/20

(54) **VERFAHREN ZUM AUTOMATISIERTEN FÜHREN EINES FAHRZEUGES, FAHRT-STEUEREINHEIT UND FAHRZEUG**
METHOD FOR THE AUTOMATED GUIDANCE OF A VEHICLE, JOURNEY CONTROL UNIT AND VEHICLE
PROCÉDÉ DE GUIDAGE AUTOMATISÉ D'UN VÉHICULE, UNITÉ DE COMMANDE DE TRAJET ET VÉHICULE

(30) Priorität: 19.08.2020 DE 102020121733
(43) Veröffentlichungstag der Anmeldung: 28.06.2023
(73) Patentinhaber: ZF CV Systems Global GmbH, 3006 Bern (CH)
(72) Erfinder: PLÄHN, Klaus, 30926 Seelze (DE); WULF, Oliver, 31535 Neustadt (DE); BÖTTCHER, Jonas, 30455 Hannover (DE)
(74) Vertreter: Schäferjohann, Volker
(86) Internationale Anmeldenummer: PCT/EP2021/070203
(87) Internationale Veröffentlichungsnummer: WO 2022/037874

(56) Entgegenhaltungen:
- EP-A1- 3 088 281
- EP-A1- 3 369 634
- EP-A1- 3 415 389
- EP-A1- 3 486 135
- WO-A1-2005/042321
- US-A1- 2017 115 662

## Beschreibung

Die Erfindung betrifft ein Verfahren zum automatisierten Führen eines Fahrzeuges, eine Fahrt-Steuereinheit zur Durchführung des Verfahrens sowie ein Fahrzeug.

Aus dem Stand der Technik ist bekannt, dass automatisiert gesteuerte Fahrzeuge einen "Virtuellen Fahrer (Virtual Driver)" aufweisen, der durch eine elektronische VD-Einheit umgesetzt ist und in dem eine Soll-Trajektorie automatisiert festgelegt wird, entlang derer sich das Fahrzeug automatisiert bewegen soll. Dabei wird durch eine Umfelderfassung überwacht, ob sich das Fahrzeug tatsächlich entlang der Soll-Trajektorie bewegt. Ergibt sich eine Ist-Abweichung zwischen der aktuellen Position des Fahrzeuges und der Soll-Trajektorie, werden basierend darauf in einer ersten Bewegungs-Regeleinheit Stellgrößen ermittelt, mit denen entsprechende Aktuatoren eines Antriebssystems und/oder eines Bremssystems und/oder eines Lenksystems derartig automatisiert angesteuert werden, dass sich die Position des Fahrzeuges wieder der Soll-Trajektorie annähert. Um diese Aufgabe zu erfüllen, stehen der ersten Bewegungs-Regeleinheit ein Modell, Parameter und Messgrößen des Fahrzeugs, sowie die Methoden der Regelungstechnik zur Verfügung.

Problematisch hierbei ist, dass die Stabilität des Fahrzeuges bei einer Ansteuerung der Aktuatoren mit den Stellgrößen lediglich bei niedrigen Ist-Geschwindigkeiten des Fahrzeuges sowie bei Fahrbahnen mit hohen Reibwerten sichergestellt werden kann. Ein automatisiert gesteuertes Fahrzeug, beispielsweise ein Nutzfahrzeug oder ein Bus, das in einer Automatisierungsstufe gemäß einem SAE-Level zwischen 3 und 5 angesteuert wird, wird jedoch auch bei hohen Ist-Geschwindigkeiten und Fahrbahnen mit geringen Reibwerten betrieben. Daher kann mit einer derartigen ersten Bewegungs-Regeleinheit eine stabiler Fahrzustand nicht in jeder automatisierten Fahrsituation sichergestellt werden, so dass es zu ungewollten Fahrzuständen kommen kann.

Bekannt sind zudem Stabilitätsregelsysteme, die einen manuellen Fahrer durch einen automatisierten Eingriff in das Antriebssystem und/oder das Bremssystem und/oder das Lenksystem in stabilitätskritischen Fahrsituationen unterstützen, wobei dies beispielhaft in WO 2017/102682 A1 oder CN109017758A beschrieben ist. Diese Stabilitätsregelsysteme sind jedoch auf das Verhalten des manuellen Fahrers abgestimmt, so dass diese nicht in jeglichen Fahrsituationen auf eine automatisierte Fahrsituation mit einer automatisiert vorgegebenen Soll-Trajektorie anwendbar sind. Der Unterschied ist dabei, dass die Reaktion des Fahrers nicht vorhersehbar ist, dieser aber auch weiterhin das Fahrgeschehen überwacht und auf eine Systemreaktion auch reagieren kann.

Weiterhin ist in EP2261093A1 vorgesehen, eine Gierrate für einen zukünftigen Pfad des Fahrzeuges in Abhängigkeit des Verhaltens des Fahrers zu überwachen. Dabei wird anhand aktueller Zustandsparameter und dem Fahrbahnverlauf eine simulierte Trajektorie ermittelt, entlang derer der Fahrer das Fahrzeug vermutlich manuell führen wird. In Abhängigkeit davon findet eine gierratenabhängige Bewertung des Fahrzustandes statt. Auch in US2007185638A, CN109050658A und CN109552312 A wird das manuell gesteuerte Fahrzeug im Rahmen einer Assistenzfunktion in Abhängigkeit der Gierrate gesteuert, um einen stabilen Fahrzustand einzustellen.

In DE 102016005966A1, DE102014008199A1 und US2015105990A ist weiterhin eine Gierratenüberwachung vorgesehen, bei der ein Korrekturlenkwinkel eingestellt wird, um das Fahrzeug stabil zu halten. In US2007008090A ist zudem eine Umkippverhinderung durch prädiktives Ermitteln einer Trajektorie, die vom Fahrer manuell vorgegeben wird, vorgesehen.

In US2018297587A1 ist vorgesehen, für den aktuellen Zeitpunkt und für zukünftige Zeitpunkte einen idealen Zustands-Vektor aus automatisiert vorgegebenen Anforderungen an das Antriebssystem und/oder das Bremssystem und/oder das Lenksystem (ebenfalls für den aktuellen Zeitpunkt und/oder für einen Zeitpunkt in der Zukunft) zu ermitteln. Aus diesem idealen Zustands-Vektor wird anschließend ein Soll-Giermoment ermittelt und dieses Giermoment einer Stabilitätsregelung zugeführt, die wiederum die Fahrzeugdynamik automatisiert beeinflusst, um eine Instabilität zu vermeiden. Daher wird der Fahrzustand anhand von automatisiert vorgegebenen Soll-Anforderungen ermittelt und eine giermomentabhängige Stabilitätsregelung durchgeführt.

Aus der EP3088281A1 ist es bekannt in einer ersten Steuereinheit eine Soll-Trajektorie zu berechnen und diese an eine zweite Steuereinheit zu liefern, die die Ansteuerung des Antriebssystems basierend auf der Soll-Trajektorie übernimmt. Zu der Soll-Trajektorie wird ein Steuerband berechnet. Der Steuer- und Regelalgorithmus arbeitet normal, solange die Ist-Trajektorie noch innerhalb des Steuerbandes liegt. Wenn die Ist-Trajektorie außerhalb des Steuerbandes liegt, wird auf einen anderen Regelalgorithmus umgeschaltet, bei dem mit größerer Regelamplitude geregelt wird.

Aus der US2017/0115662A1 ist es bekannt in einer Steuereinheit sukzessive zu prüfen, ob die Ist-Trajektorie von der Soll-Trajektorie abweicht und wenn ja, die Soll-Trajektorie zu verändern und näher an die Ist-Trajektorie zu legen. Dadurch soll die Fahrstabilität verbessert werden.

Aus der EP3415389A1 ist eine Lösung bekannt, bei der neben einem "normal travelling plan" ein "abnormal travelling plan" für ein Fahrzeug errechnet wird. Der "abnormal traveling plan" wird aber nur dann errechnet, wenn bereits ein ungewöhnlicher Zustand detektiert wurde.

Aufgabe der Erfindung ist, ein Verfahren zum automatisierten Führen eines Fahrzeuges anzugeben, das einen sicheren und zuverlässigen Betrieb des Fahrzeuges gewährleistet. Aufgabe ist weiterhin, eine Fahrt-Steuereinheit sowie ein Fahrzeug anzugeben.

Diese Aufgabe wird durch ein Verfahren, eine Fahrt-Steuereinheit sowie ein Fahrzeug gemäß den unabhängigen Ansprüchen gelöst. Die Unteransprüche geben bevorzugte Weiterbildungen an.

Erfindungsgemäß ist demnach ein Verfahren zum automatisierten Führen eines Fahrzeuges entlang einer vorgegebenen Soll-Trajektorie mit einer Ist-Geschwindigkeit vorgesehen, wobei die Soll-Trajektorie durch geometrische bzw. kinematische Trajektorien-Größen charakterisiert ist, mit mindestens den Schritten des Anspruchs 1.

Dabei können die Stellgrößen bei Vorliegen eines ungewollten Fahrzustandes durch die Stabilitätsgrößen überschrieben werden oder aber die Stellgrößen entsprechend in Abhängigkeit der Stabilitätsgrößen angepasst werden, um auf einen ungewollten Fahrzustand zu reagieren. Die automatisierte Ansteuerung des Fahrzeuges kann also entsprechend dem ermittelten Fahrzustand angepasst werden. Anstatt oder ergänzend zu einer Anpassung in Abhängigkeit der Stabilitätsgrößen kann auch unmittelbar die Soll-Trajektorie angepasst werden, so dass dem Bewegungsregler bereits eine angepasste Soll-Trajektorie vorgegeben wird und eine Anpassung in Abhängigkeit der Stabilitätsgrößen nicht mehr zwangsläufig nötig ist. Das Fahrzeug bewegt sich dann automatisch entlang eines vorgegebenen Pfades, auf dem die aktuell erkannten ungewollten Fahrzustände nicht mehr oder nur noch abgeschwächt auftreten. Diese angepasste Soll-Trajektorie kann dann als "vorgegebene Trajektorie" erneut dem erfindungsgemäßen Verfahren zugeführt werden.

Vorteilhafterweise wird dadurch erreicht, dass unmittelbar anhand der Soll-Trajektorie, d.h. des Pfades, der vorzugsweise durch einzelne Soll-Positionen und diesen zugeordnete Soll-Rotationen des Fahrzeuges geometrisch beschrieben wird und der durch eine automatisierte Ansteuerung des Fahrzeuges in Zukunft abgefahren werden soll, geprüft werden kann, ob das Fahrzeug gegenwärtig bzw. in der Zukunft zu Instabilitäten bzw. ungewollten Fahrzuständen neigt. Eine demgegenüber ungenauere Analyse der verarbeiteten und bereits ausgegebenen Anforderungen entfällt dadurch, so dass direkt der vom virtuellen Fahrer vorgegebene Pfad herangezogen wird für eine Bewertung der Stabilität. Dies macht die Ermittlung eines ungewollten Fahrzustandes genauer und auch unabhängig von den verwendeten Aktoren bzw. der Vorverarbeitung vor der Ausgabe der einzelnen Anforderungen an das Antriebssystem, Bremssystem bzw. Lenksystem. Die Flexibilität wird dadurch erhöht. Insgesamt wird dem Verfahren das Ziel verfolgt, nicht mehr den menschlichen Fahrer z.B. bei hoher Querdynamik oder auf niedrigem Reibwert zu unterstützen, sondern in genau denselben Situationen den "Virtuellen Fahrer" beim genauen Abfahren der von diesem vorgegebenen Soll-Trajektorie (Soll-Position und Soll-Rotation). Der "Virtuelle Fahrer" wird dabei in dem automatisiert gesteuerten Fahrzeug durch die elektronische VD-Einheit umgesetzt. In der VD-Einheit wird dabei eine Soll-Trajektorie festgelegt, entlang derer sich das Fahrzeug automatisiert bewegen soll.

Vorzugsweise ist vorgesehen, dass in dem erfindungsgemäßen Verfahren
- das Ermitteln einer Ist-Abweichung des Fahrzeuges von der Soll-Trajektorie in einer VD-Einheit durchgeführt wird;
- das Erzeugen von Stellgrößen in Abhängigkeit der ermittelten Ist-Abweichung in einer ersten Bewegungs-Regeleinheit durchgeführt wird; und
- das Ermitteln, ob für einen zukünftigen Zeitpunkt ein ungewollter Fahrzustand vorliegt in einer zweiten Bewegungs-Regeleinheit durchgeführt wird, wobei
- das Erzeugen der Stellgrößen in der ersten Bewegungs-Regeleinheit unabhängig von dem Ermitteln des ungewollten Fahrzustandes in der zweiten Bewegungs-Regeleinheit durchgeführt wird und/oder
- das Ermitteln einer Ist-Abweichung in der VD-Einheit unabhängig von dem Ermitteln des ungewollten Fahrzustandes in der zweiten Bewegungs-Regeleinheit durchgeführt wird.

Damit wird durch die zweite Bewegungs-Regeleinheit vorteilhafterweise eine einfache Erweiterungsmöglichkeit eines bestehenden automatisierten Regelsystems in einem Fahrzeug mit einem "Virtuellen Fahrer", der die Soll-Trajektorie automatisiert vorgibt, und einer ersten Bewegungs-Regeleinheit, die die Bewegung entlang der Soll-Trajektorie automatisiert umsetzt, bereitgestellt, wobei mit dieser Erweiterung zusätzlich stabilitätskritische Zustände vermieden werden können. Dadurch ist eine einfache Nachrüstbarkeit des erfindungsgemäßen Verfahrens bzw. der erfindungsgemäßen Vorrichtung in ein Fahrzeug mit einem automatisierten Regelsystem, das keine automatisierte Stabilitätsregelung aufweist, gegeben, da die zweite Bewegungs-Regeleinheit lediglich über entsprechende Schnittstellen mit dem bestehenden System zu verbinden ist.

Vorteilhafterweise kann zum Vermeiden von stabilitätskritischen Zuständen während einer automatisierten Fahrt aber auch eine eigenständige Lösung bereitgestellt werden, die von dem herkömmlichen automatisierten System im Fahrzeug, das mit einem Virtuellen Fahrer und einer ersten Bewegungs-Regeleinheit ausgestattet ist, unabhängig konzipiert werden kann. Der jeweilige Fahrzeughersteller kann das automatisierte System also unabhängig von dem System, das für die Stabilität während der automatisierten Fahrt sorgt, konzipieren und umsetzen. Dies vereinfacht den Aufwand für den jeweiligen Fahrzeughersteller. Grundsätzlich ist es jedoch auch möglich, die einzelnen Komponenten für die Stabilität mit in die Komponenten des automatisierten Gesamtsystems zu integrieren, wenn eine Nachrüstung bzw. einer Erweiterung des bestehenden Systems nicht nötig ist.

Vorzugsweise ist weiterhin vorgesehen, dass das Ermitteln, ob für einen zukünftigen Zeitpunkt ein ungewollter Fahrzustand vorliegt, ergänzend in Abhängigkeit von Fahrzeug-Informationen über das Fahrzeug und/oder von einer Fahrzeug-Ist-Dynamik des Fahrzeuges und/oder von Soll-Anforderungen zum automatisierten Ansteuern des Antriebssystems und/oder des Bremssystems und/oder des Lenksystems erfolgt. Dadurch kann vorteilhafterweise ein exakter Vergleich erfolgen, wie stark das Ist-Verhalten des Fahrzeuges von dem Soll-Verhalten abweicht und inwieweit dies zu einer Instabilität führen kann. Durch die zusätzliche Berücksichtigung von Fahrzeugparametern können zudem auch weitere die Stabilität beeinflussende Faktoren herangezogen werden. Die Berücksichtigung der Soll-Anforderungen führt ergänzend dazu, dass bei einer Abweichung von der aktuellen Soll-Trajektorie auch die in Reaktion darauf aktuell angeforderte Soll-Dynamik einbezogen werden kann. Insbesondere kann dadurch eine aktuell "angeforderte" Soll-Gierrate einbezogen werden.

Vorzugsweise ist dabei vorgesehen, dass die Soll-Anforderungen in Abhängigkeit der Ist-Abweichung ermittelt werden, wobei über longitudinale Soll-Anforderungen eine in Fahrtrichtung des Fahrzeuges abweichende Position und/oder Ist-Rotation des Fahrzeuges von der Soll-Trajektorie (Soll-Position und Soll-Rotation) korrigiert wird, und über laterale Soll-Anforderungen eine senkrecht zur Fahrtrichtung abweichende Position und/oder Ist-Rotation des Fahrzeuges von der Soll-Trajektorie (Soll-Position und Soll-Rotation) korrigiert wird. Dadurch kann vorteilhafterweise eine gezielte Auftrennung in laterale und longitudinale Bewegungsanteile erfolgen, was die nachfolgende Analyse und auch die Anpassung der Stellsignale im Falle einer Instabilität vereinfacht. Sind nur laterale Bewegungsanteile von einer Instabilität betroffen, können diese in einfacher Weise angepasst werden, ohne zwangsläufig auch longitudinale Bewegungsanteile merkbar zu verändern, und umgedreht.

Zusammenhängend damit ist vorzugsweise weiterhin vorgesehen, dass als Stellgrößen in Abhängigkeit der Ist-Abweichung eine Antriebs-Stellgröße und/oder eine Brems-Stellgröße und/oder eine Lenk-Stellgröße ermittelt werden, wobei das Antriebssystem des Fahrzeuges in Abhängigkeit der Antriebs-Stellgröße und das Bremssystem des Fahrzeuges in Abhängigkeit der Brems-Stellgröße und das Lenksystem des Fahrzeuges in Abhängigkeit der Lenk-Stellgröße automatisiert angesteuert werden können, um die Position und/oder die Ist-Rotation des Fahrzeuges an die Soll-Trajektorie (Soll-Position und Soll-Rotation) anzunähern. Demnach können für jedes System getrennt voneinander Stellgrößen ermittelt werden, die in Abhängigkeit des Fahrzustandes auch unabhängig voneinander in Abhängigkeit der Stabilitätsgrößen angepasst werden können. Dadurch ist eine erhöhte Flexibilität gegeben.

Vorzugsweise ist demnach vorgesehen, dass das Vorliegen eines ungewollten Fahrzustandes ermittelt wird, wenn aus der vorgegebenen Soll-Trajektorie in Abhängigkeit der geometrischen Trajektorien-Größen folgt, dass dem Fahrzeug ein instabiler Zustand für einen zukünftigen Zeitpunkt droht. Gemäß einer Ausführungsform ist dabei vorgesehen, dass das Vorliegen eines ungewollten Fahrzustandes ermittelt wird, wenn eine Gierraten-Abweichung zwischen einer Soll-Gierrate und einer Ist-Gierrate für einen zukünftigen Zeitpunkt einen Abweichungs-Grenzwert überschreitet, wobei die Soll-Gierrate für einen zukünftigen Zeitpunkt mittelbar oder unmittelbar aus der vorgegebenen Soll-Trajektorie in Abhängigkeit der geometrischen Trajektorien-Größen folgt. Vorteilhafterweise kann eine (drohende) Instabilität also anhand des Gierverhaltens des Fahrzeuges ermittelt werden, das aus der geometrischen Soll-Trajektorie hergeleitet wird.

Unter einer unmittelbaren Bestimmung der Soll-Gierrate aus der vorgegebenen Soll-Trajektorie wird dabei verstanden, dass die Soll-Gierrate zeitlich aus der Soll-Position und der Soll-Rotation ermittelt wird. Bei einer mittelbaren Bestimmung der Soll-Gierrate aus der vorgegeben Soll-Trajektorie kann beispielsweise auf die Soll-Anforderungen, die unmittelbar aus der Soll-Trajektorie folgen, zurückgegriffen werden. Über die Soll-Anforderungen kann die tatsächliche aktuelle Soll-Dynamik berücksichtigt werden, die sich aufgrund von Abweichungen von der Soll-Trajektorie ergibt.

Vorzugsweise kann dazu vorgesehen sein, bei einem Überschreiten des Abweichungs-Grenzwertes in Abhängigkeit der Gierraten-Abweichung als Stabilitätsgröße
- eine erste Antriebs-Stabilitätsgröße zum Begrenzen der Ist-Geschwindigkeit des Fahrzeuges und/oder
- eine erste Brems-Stabilitätsgröße zum Reduzieren der Ist-Geschwindigkeit des Fahrzeuges
derartig zu erzeugen und auszugeben, dass bei einer automatisierten Ansteuerung des Fahrzeuges in Abhängigkeit der ersten Antriebs-Stabilitätsgröße und/oder der ersten Brems-Stabilitätsgröße die Ist-Geschwindigkeit des Fahrzeuges eine vorgegebene Grenzgeschwindigkeit nicht übersteigt. Die jeweilige Stellgröße für den Antrieb bzw. die Bremsen kann also in Abhängigkeit der Gierraten-Abweichung gezielt angepasst werden, was in dem Fall ausschließlich durch eine Veränderung der longitudinalen Bewegung (Anpassung der Geschwindigkeit) erfolgt, so dass z.B. auf ein Untersteuern oder Übersteuern effektiv reagiert werden kann.

Ergänzend oder alternativ kann aber auch ein Eingriff in die laterale Bewegung des Fahrzeuges erfolgen, indem bei einem Überschreiten des Abweichungs-Grenzwertes in Abhängigkeit der Gierraten-Abweichung als Stabilitätsgröße
- eine zweite Brems-Stabilitätsgröße zum radindividuellen Abbremsen des Fahrzeuges und/oder
- eine erste Lenk-Stabilitätsgröße zum Lenken des Fahrzeuges derartig erzeugt und ausgegeben wird, dass sich bei einer automatisierten Ansteuerung des Fahrzeuges in Abhängigkeit der zweiten Brems-Stabilitätsgröße und/oder der ersten Lenk-Stabilitätsgröße die Ist-Gierrate an die Soll-Gierrate annähert. Damit wird der Gierbewegung, die zu einer Instabilität führen kann oder könnte, gezielt entgegengewirkt, ohne dabei zwangsläufig auch eine longitudinale Bewegung des Fahrzeuges zu verändern.

Vorzugsweise ist weiterhin vorgesehen, dass eine zweite Lenk-Stabilitätsgröße erzeugt und ausgegeben wird zum Verhindern eines ungewollten Fahrzustandes, wobei die zweite Lenk-Stabilitätsgröße erzeugt wird in Abhängigkeit
- der Ist-Geschwindigkeit des Fahrzeuges und/oder eines aus der Soll-Trajektorie abgeleiteten Soll-Kurvenradius, und/oder
- eines Brems-Giermoments, wobei das Brems-Giermoment in Abhängigkeit von seitenweise unterschiedlich wirkenden Radschlupfen an Rädern des Fahrzeuges ermittelt wird, und/oder
- eines Neigungswinkels des Fahrzeuges gegenüber der Fahrbahn unter Berücksichtigung einer aktuellen Fahrzeugmasse.

Vorteilhafterweise kann dadurch die aktuelle Fahrzeugdynamik noch genauer überwacht werden, insbesondere im Hinblick auf ein Eigenlenkverhalten des Fahrzeuges, auf eine µ-Split-Bremsung bei seitenweise unterschiedlichen Reibwerten des Untergrundes sowie auf ein Neigungsverhalten des Fahrzeuges, die allesamt Einfluss auf die Bewegung des Fahrzeuges in lateraler Richtung haben. Entsprechend kann durch ein Gegenlenken in Abhängigkeit der Lenk-Stabilitätsgröße stabilisierend eingegriffen werden, um das Fahrzeug stabil auf der vorgegebenen Soll-Trajektorie zu halten. Die nötigen Parameter (Soll-Kurvenradius, Radschlupf, Neigungswinkel) stehen dem System dabei über die Schnittstellen im Fahrzeug zur Verfügung, da diese im Rahmen weiterer Stabilitätsregelungen im Fahrzeug bereits erfasst und ausgegeben werden. Daher sind keine zusätzlichen Komponenten nötig.

Vorzugsweise ist weiterhin vorgesehen, dass das Vorliegen eines ungewollten Fahrzustandes ermittelt wird, wenn eine Querbeschleunigung des Fahrzeuges für einen zukünftigen Zeitpunkt eine Grenz-Querbeschleunigung überschreitet, wobei die Querbeschleunigung für den zukünftigen Zeitpunkt aus der vorgegebenen Soll-Trajektorie in Abhängigkeit der geometrischen Trajektorien-Größen abgeschätzt wird. Damit kann im Rahmen des Verfahrens auch auf derartige stabilitätskritische Situationen in lateraler Richtung mit einem entsprechenden Eingriff in die Fahrdynamik reagiert werden.

Vorzugsweise ist dazu vorgesehen, dass bei einem Überschreiten der Grenz-Querbeschleunigung für einen zukünftigen Zeitpunkt als Stabilitätsgröße eine zweite Antriebs-Stabilitätsgröße und/oder eine dritte Brems-Stabilitätsgröße derartig erzeugt und ausgegeben wird, dass bei einer automatisierten Ansteuerung des Fahrzeuges in Abhängigkeit der dritten Brems-Stabilitätsgröße und/oder der zweiten Antriebs-Stabilitätsgröße die Querbeschleunigung des Fahrzeuges auf die Grenz-Querbeschleunigung sinkt oder diese unterschreitet. Damit wird gezielt die longitudinale Bewegung des Fahrzeuges angepasst, um eine zu hohe Querbeschleunigung zu vermeiden.

Vorzugsweise ist weiterhin vorgesehen, dass die Soll-Trajektorie in Abhängigkeit eines Stabilitäts-Indikators angepasst wird, wobei der Stabilitäts-Indikator in Abhängigkeit von einer aktuellen Fahrzeug-Ist-Dynamik sowie der aktuellen Soll-Trajektorie zeitabhängig angibt, wie wahrscheinlich ein ungewollter Fahrzustand zu einem Zeitpunkt zwischen einem aktuellen Zeitpunkt und einem zukünftigen Zeitpunkt ist. Vorteilhafterweise wird der ungewollte Fahrzustand also durch eine Kenngröße quantitativ bewertet, so dass die Soll-Trajektorie derartig angepasst werden kann, dass dieser ungewollte Fahrzustand bei einem Abfahren der angepassten Soll-Trajektorie weitestgehend vermieden werden kann und weitere korrigierende Eingriffe in Abhängigkeit der Stabilitätsgrößen entfallen oder zumindest auf ein Minimum reduziert werden können.

Vorzugsweise ist dazu vorgesehen, dass der Stabilitäts-Indikator gebildet wird in Abhängigkeit mindestens eines Merkmals ausgewählt aus der Gruppe bestehend aus:
einer Knickwinkel-Abweichung zwischen einem aktuellen Ist-Knickwinkel und
einem Soll-Knickwinkel, einer Gierraten-Abweichung zwischen einer Ist-Gierrate und einer Soll-Gierrate, dem Überschreiten einer Grenz-Querbeschleunigung, einem Radschlupf der einzelnen Räder des Fahrzeuges, dem Vorliegen eines ABS-Eingriffes, dem Vorliegen eines ESC-Eingriffes und/oder einer Beladungsinformation. All diese Parameter und ggf.
auch weitere im Fahrzeug zur Verfügung stehende Parameter können dabei für eine quantitative Bewertung des ungewollten Fahrzustandes herangezogen werden.

Erfindungsgemäß ist weiterhin eine Fahrt-Steuereinheit vorgesehen, die zur Durchführung des erfindungsgemäßen Verfahrens ausgebildet ist, wobei die Fahrt-Steuereinheit mindestens aufweist:
- eine VD-Einheit zur Festlegung einer Soll-Trajektorie, wobei die Soll-Trajektorie durch geometrische Trajektorien-Größen charakterisiert ist, und zur Ausgabe einer Ist-Abweichung, wenn das Fahrzeug von der Soll-Trajektorie abweicht,
- eine erste Bewegungs-Regeleinheit, wobei die erste Bewegungs-Regeleinheit ausgebildet ist, in Abhängigkeit der Ist-Abweichung Stellgrößen derartig zu erzeugen, dass sich das Fahrzeug bei einer automatisierten Ansteuerung eines Antriebssystems und/oder eines Bremssystems und/oder eines Lenksystems des Fahrzeuges in Abhängigkeit der erzeugten Stellgrößen an die Soll-Trajektorie annähert, wenn das Fahrzeug von der Soll-Trajektorie abweicht,
- eine zweite Bewegungs-Regeleinheit, wobei die zweite Bewegungs-Regeleinheit ausgebildet ist, zu ermitteln, ob für einen zukünftigen Zeitpunkt ein ungewollter Fahrzustand vorliegt, wenn sich das Fahrzeug in Abhängigkeit der erzeugten Stellgrößen an die Soll-Trajektorie annähert, wobei der ungewollte Fahrzustand aus der vorgegebenen Soll-Trajektorie in Abhängigkeit der geometrischen Trajektorien-Größen ermittelbar ist, wobei
- weiterhin mindestens eine Verknüpfungseinheit vorgesehen ist, wobei die mindestens eine Verknüpfungseinheit ausgebildet ist, ein Verknüpfungs-Signal zum automatisierten Ansteuern des Antriebssystems und/oder des Bremssystems und/oder des Lenksystems des Fahrzeuges zu erzeugen und auszugeben, wobei das Verknüpfungs-Signal bei Vorliegen eines ungewollten Fahrzustandes in Abhängigkeit von erzeugten Stabilitätsgrößen erzeugt und ausgegeben werden kann, und/oder
- die VD-Einheit ausgebildet ist, die Soll-Trajektorie anzupassen, wenn ein ungewollter Fahrzustand vorliegt.

Erfindungsgemäß wird daher eine nachrüstbare Fahrt-Steuereinheit angegeben, die sich einfach in die bestehende Infrastruktur in einem Fahrzeug einbinden lässt, beispielsweise durch Anbindung an die jeweils vorhandenen Schnittstellen im Fahrzeug, beispielsweise einem CAN-Datenbus. Die Fahr-Steuereinheit kann dabei beispielsweise Bestandteil eines elektronischen Bremssystems sein, in dem einzelne Größen bereits ermittelt und auch verwendet werden. Dadurch ist eine einfache Nachrüstbarkeit gegeben.

Die erste und/oder die zweite Bewegungs-Regeleinheit können dabei in der VD-Einheit, in der die Soll-Trajektorie vorgegeben wird, auch integriert sein. Auch kann ein Zusammenfassen der ersten Bewegungs-Regeleinheit und der zweiten Bewegungs-Regeleinheit vorgesehen sein. Um die volle Flexibilität zu erreichen, ist es jedoch vorteilhaft, beide Regeleinheiten getrennt voneinander bereitzustellen, so dass der Fahrzeughersteller beispielsweise auch lediglich die zweite Bewegungs-Regeleinheit, mit der ein ungewollter Fahrzustand erkannt und mithilfe derer entsprechend darauf reagiert werden kann, zu einer bestehenden ersten Bewegungs-Regeleinheit hinzugefügt werden kann. Die Funktion der ersten Bewegungs-Regeleinheit, die bei einer stabilen Fahrt zu Anwendung kommt, kann daher durch ein einfaches Nachrüsten der zweiten Bewegungs-Regeleinheit erweitert werden. Dazu ist diese an die entsprechenden vorhandenen Schnittstellen im Fahrzeug anzuschließen.

Vorzugsweise ist weiterhin vorgesehen, dass dem Antriebssystem und/oder dem Bremssystem und/oder dem Lenksystem jeweils eine Verknüpfungseinheit zugeordnet ist, wobei das Antriebssystem mit einem Antriebs-Verknüpfungs-Signal, das Bremssystem mit einem Brems-Verknüpfungs-Signal und das Lenksystem mit einem Lenk-Verknüpfungs-Signal automatisiert angesteuert werden kann. Das jeweilige Verknüpfungs-Signal kann dabei über eine Systemlogik in der jeweiligen Verknüpfungseinheit ermittelt werden, um das Fahrzeug bei einem ungewollten Fahrzustand entsprechend in Abhängigkeit der Stabilitätsgrößen anzusteuern, d.h. ausschließlich mit den erzeugten Stabilitätsgrößen oder die Stellgrößen werden in Abhängigkeit der erzeugten Stabilitätsgrößen angepasst. Dadurch kann eine hohe Flexibilität erreicht werden, da für jede laterale bzw. longitudinale Regelkomponente einzeln über die Systemlogik entschieden werden kann, wie auf eine Instabilität reagiert wird bzw. wie sich das Fahrzeug in Relation zur Soll-Trajektorie bewegt.

Vorzugsweise ist weiterhin vorgesehen, dass die zweite Bewegungs-Regeleinheit einen Gierraten-Regler aufweist, wobei der Gierraten-Regler ausgebildet ist, auf das Vorliegen eines ungewollten Fahrzustandes in Abhängigkeit einer ermittelten Gierraten-Abweichung zu schließen und mit der Ermittlung und der Ausgabe einer entsprechenden Stabilitätsgröße zu reagieren. Weiterhin kann die zweite Bewegungs-Regeleinheit eine RSC-Einheit aufweisen, wobei die RSC-Einheit ausgebildet ist, auf das Vorliegen eines ungewollten Fahrzustandes in Abhängigkeit einer Überschreitung der Grenz-Querbeschleunigung zu schließen und mit der Ermittlung und der Ausgabe einer entsprechenden Stabilitätsgröße zu reagieren.

Außerdem kann die zweite Bewegungs-Regeleinheit einen Stabilisierungs-Monitor aufweisen, wobei der Stabilisierungs-Monitor ausgebildet ist, einen Stabilitäts-Indikator in Abhängigkeit einer aktuellen Fahrzeug-Ist-Dynamik sowie der aktuellen Soll-Trajektorie zu bilden, wobei der Stabilitäts-Indikator zeitabhängig angibt, wie wahrscheinlich ein ungewollter Fahrzustand zu einem Zeitpunkt zwischen dem aktuellen Zeitpunkt und dem zukünftigen Zeitpunkt ist. Damit kann eine quantitative Bewertung des ungewollten Fahrzustandes erfolgen, anhand derer die VD-Einheit die Soll-Trajektorie anpassen kann.

Erfindungsgemäß ist weiterhin ein Fahrzeug mit einer erfindungsgemäßen Fahrt-Steuereinheit vorgesehen, zum automatisierten Führen des Fahrzeuges entlang einer vorgegebenen Soll-Trajektorie oder einer angepassten Soll-Trajektorie.

Die Erfindung wird im Folgenden anhand eines Ausführungsbeispiels näher erläutert. Es zeigen:
- Fig. 1: eine schematische Ansicht eines automatisiert steuerbaren Fahrzeuges;
- Fig. 1a: eine beispielhafte Soll-Trajektorie;
- Fig. 2: eine Detailansicht des Fahrzeuges gemäß Fig. 1;
- Fig. 3: eine Detailansicht des Fahrzeuges gemäß Fig. 1 in einer weiteren Ausführung;
- Fig. 4, 5: Flussdiagramme des erfindungsgemäßen Verfahrens.

Sollte sich der nachfolgenden Figurenbeschreibung auf einen ungewollten Fahrzustand zu einem aktuellen Zeitpunkt t0 beziehen, handelt es sich hierbei nicht um ein Merkmal der vorliegenden Erfindung, sondern dient zum besseren Verständnis der vorliegenden Erfindung. Dies bedeutet, dass aber auch ein ungewollter Fahrzustand zu einem aktuellen Zeitpunkt t0 mit einem ungewollten Fahrzustand für einen zukünftigen Zeitpunkt tZ für die vorliegende Erfindung kombiniert werden kann, um dem Erfindungsgedanken zu entsprechen.

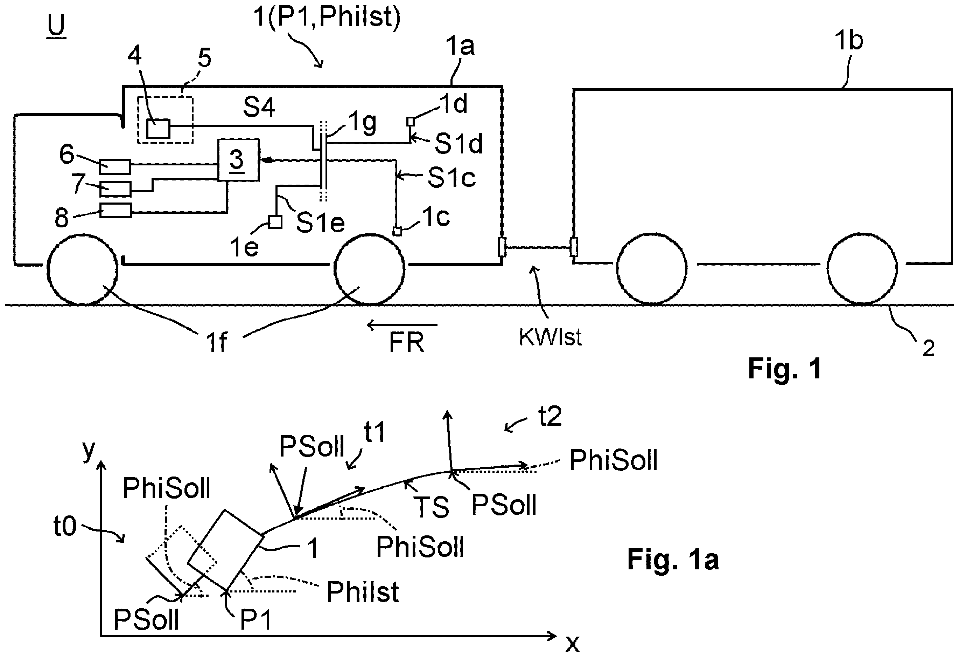

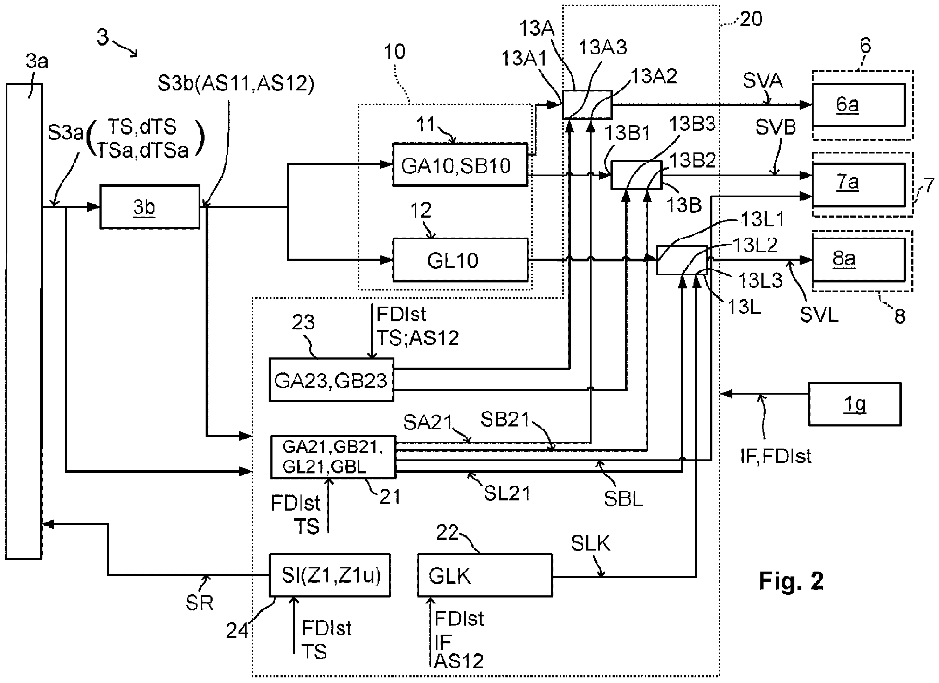

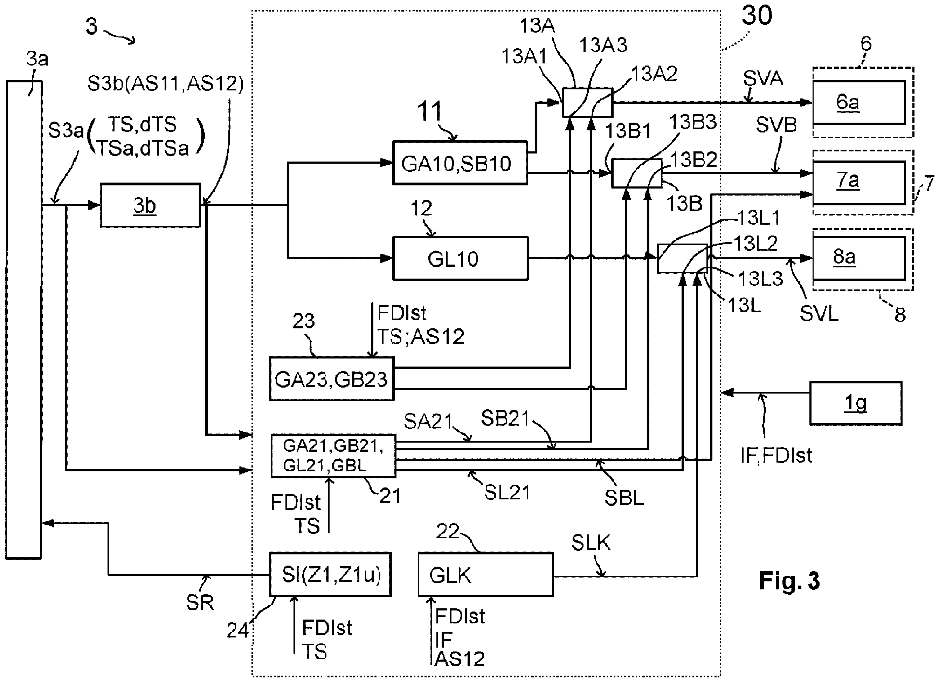

In Figur 1 ist schematisch ein Fahrzeug 1 dargestellt, das sich auf einer Fahrbahn 2 bewegt. Das Fahrzeug 1 kann einteilig oder mehrteilig, d.h. aus einem Zugfahrzeug 1a und einem Anhänger 1b, sein, beispielsweise ein Nutzfahrzeug oder ein Bus. Das Fahrzeug 1 kann mithilfe einer Fahrt-Steuereinrichtung 3 automatisiert gesteuert werden, wobei Automatisierungsstufen gemäß dem SAE-Level 3 bis 5 vorgesehen sind. Beispielhaft sind zwei Fahrt-Steuereinrichtungen 3 in den Figuren 2 und 3 dargestellt.

Die Fahrt-Steuereinrichtung 3 weist demnach eine VD-Einheit 3a (Virtual Driver) auf, in der anhand von Kriterien, beispielsweise eines detektierten Straßenverlaufes bzw. der aktuellen Umgebung U um das Fahrzeug 1, eine Soll-Trajektorie TS festgelegt wird, entlang derer sich das Fahrzeug 1 in Zukunft automatisiert bewegen soll. Die Soll-Trajektorie TS ist dabei ein zukünftiger Pfad, der durch eine automatisierte Ansteuerung eines Antriebssystems 6 und/oder eines Bremssystems 7 und/oder eines Lenksystems 8 im Fahrzeug 1 abgefahren werden soll. Die Soll-Trajektorie TS wird dabei durch kinematische Trajektorien-Größen kG charakterisiert, so dass die geplante Bewegung des Fahrzeuges 1 bzw. der zukünftige Pfad ausschließlich geometrisch beschrieben wird, d.h. es liegt eine geometrisch beschriebene Soll-Trajektorie TS vor.

Als kinematische Trajektorien-Größen kG kommen gemäß Fig. 1a beispielsweise Soll-Positionen PSoll (geforderte Position), die durch x-Koordinaten x und y-Koordinaten y eines vorzugsweise kartesischen Koordinatensystems beschrieben werden, sowie eine Soll-Rotation PhiSoll des Fahrzeuges 1 an den jeweiligen Zeitpunkten t0, t1, t2 in Frage. Die Soll-Rotation PhiSoll gibt dabei an, wie das Fahrzeug 1 an der jeweiligen Soll-Position PSoll orientiert ist. Die Soll-Position PSoll sowie die Soll-Rotation PhiSoll können dabei relativ, d.h. in Bezug zum vorherigen Zustand, oder absolut, d.h. in Bezug zu einem Ausgangspunkt, beschrieben werden.

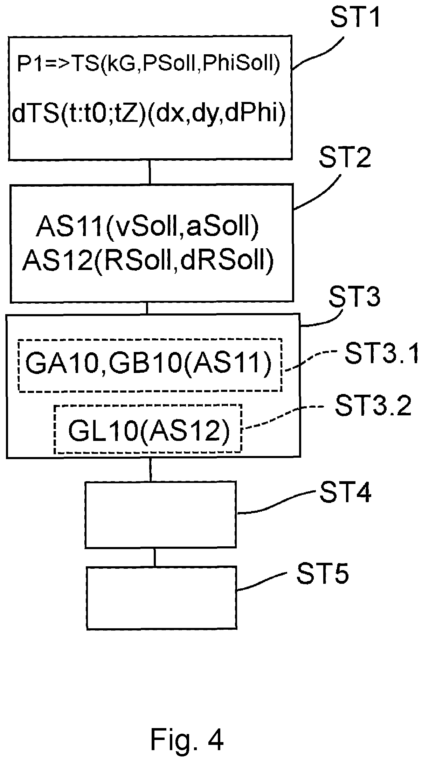

Über die Fahrt-Steuereinrichtung 3 kann das in Fig. 4 beispielhaft dargestellte Verfahren wie folgt durchgeführt werden:
Die VD-Einheit 3a wertet zunächst Sensor-Signale S4 von Sensoren 4 eines Umgebungserfassungssystems 5 aus, um in einem ersten Schritt ST1 zu ermitteln, ob sich das Fahrzeug 1 auch tatsächlich entlang der geometrisch festgelegten Soll-Trajektorie TS bewegt. Dazu wird eine Ist-Abweichung dTS zwischen dem Fahrzeug 1 und der Soll-Trajektorie TS, d.h. eine Abweichung zwischen der aktuellen Position P1 und einer Ist-Rotation Philst des Fahrzeuges 1 von den geometrischen Trajektorien-Größen kG (PSoll, PhiSoll), die in der Soll-Trajektorie TS festlegt sind, bestimmt. Die Ist-Abweichung dTS kann demnach geometrisch durch eine x-Abweichung dx in x-Richtung, eine y-Abweichung dy in y-Richtung (Abweichung zwischen P1 und PSoll) sowie durch eine Rotations-Abweichung dPhi beschrieben werden. Aus dieser Ist-Abweichung dTS kann geschlussfolgert werden, welche Bewegungsänderung nötig ist bzw. wie das Fahrzeug 1 anzusteuern ist, so dass sich dieses in Zukunft wieder entlang der geometrischen Soll-Trajektorie TS bewegt.

Sowohl die Soll-Trajektorie TS als auch die Ist-Abweichung dTS (oder damit zusammenhängende Größen) werden von der VD-Einheit 3a in einem Trajektorien-Signal S3a ausgegeben. Das Trajektorien-Signal S3a wird sowohl an eine Vorgabe-Einheit 3b (Motion Control) als auch an eine zweite Bewegungs-Regeleinheit 20 ausgegeben, deren Funktion später näher erläutert wird. Die Ausgabe kann in gleichwirkender Weise auch in getrennten Signalen erfolgen.

Basierend auf der Ist-Abweichung dTS werden in einem zweiten Schritt ST2 in der Vorgabe-Einheit 3b beispielsweise eine Soll-Geschwindigkeit vSoll und/oder eine Soll-Beschleunigung aSoll (positiv oder negativ) als longitudinale Soll-Anforderungen AS11, die die zukünftig gewünschte longitudinale Bewegung des Fahrzeuges 1 betreffen, sowie ein Soll-Kurvenradius RSoll oder eine Soll-Kurvenradius-Änderung dRSoll als laterale Soll-Anforderungen AS12, die die zukünftig gewünschte laterale Bewegung des Fahrzeuges 1 betreffen, ermittelt. Die Ermittlung folgt dermaßen, dass sich das Fahrzeug 1 bei einer Ansteuerung des Antriebssystems 6 und/oder des Bremssystems 7 und/oder des Lenksystems 8 in Abhängigkeit dieser Soll-Anforderungen AS11, AS12 wieder der festgelegten Soll-Trajektorie TS (d.h. der Soll-Position PSoll und der Soll-Rotation PhiSoll) annähert. Die Soll-Anforderungen AS11, AS12 werden über ein Vorgabe-Signal S3b ausgegeben.

Die Soll-Anforderungen AS11, AS12, die die zukünftig gewünschte Bewegung des Fahrzeuges 1 charakterisieren, werden anschließend in einem dritten Schritt ST3 an eine erste Bewegungs-Regeleinheit 10 sowie auch an die zweite Bewegungs-Regeleinheit 20 übermittelt. Gemäß der Umsetzung in Fig. 2 sind die erste Bewegungs-Regeleinheit 10 und die zweite Bewegungs-Regeleinheit 20 voneinander getrennt. Die zweite Bewegungs-Regeleinheit 20 kann also vollkommen unabhängig von der ersten Bewegungs-Regeleinheit 10 konzipiert und betrieben werden, so dass eine variable Nachrüstbarkeit und Erweiterbarkeit des Systems gegeben ist. Gemäß der Ausführung der Fig. 3 können beide Regeleinheiten 10, 20 aber auch in einer Gesamt-Bewegungs-Regeleinheit 30 kombiniert.

Die erste Bewegungs-Regeleinheit 10 ist in einen Longitudinal-Regler 11 und in einen Lateral-Regler 12 unterteilt. Die die longitudinale Bewegung des Fahrzeuges 1 betreffenden longitudinalen Soll-Anforderungen AS11 werden in dem Longitudinal-Regler 11 und die die laterale Bewegung des Fahrzeuges 1 beeinflussenden lateralen Soll-Anforderungen AS12 in dem Lateral-Regler 12 verarbeitet. Gleichwirkend kann vorgesehen sein, dass die Vorgabe-Einheit 3b im ersten Bewegungsregler 10 integriert ist und die entsprechenden Soll-Anforderungen AS11, AS12 unmittelbar an den jeweiligen Regler 11, 12 ausgegeben werden und in einem weiteren Signal an die zweite Bewegungs-Regeleinheit 20.

Der Longitudinal-Regler 11 ermittelt in einem ersten Teilschritt ST3.1 in Abhängigkeit der longitudinalen Soll-Anforderungen AS11 eine Antriebs-Stellgröße GA10, beispielsweise eine Antriebskraft oder eine damit zusammenhängende Größe, sowie eine Brems-Stellgröße GB10, beispielsweise eine Bremskraft oder eine damit zusammenhängende Größe. Die Antriebs-Stellgröße GA10 bzw. die Brems-Stellgröße GB10 geben dabei Stellgrößen an, mit denen die jeweils zutreffenden Aktuatoren im Fahrzeug 1, vorzugsweise der Antriebsmotor, Betriebsbremsen, Dauerbremsen, etc., anzusteuern sind, um die longitudinale Soll-Anforderung AS11 umzusetzen.

Daneben wird in einem zweiten Teilschritt ST3.2 in Abhängigkeit der lateralen Soll-Anforderungen AS12 von dem Lateral-Regler 12 eine Lenk-Stellgröße GL10, beispielsweise ein Lenkwinkel oder eine damit zusammenhängende Größe, ermittelt. Die Lenk-Stellgröße GL10 gibt dabei eine Stellgröße an, mit der der jeweils zutreffende Aktuator des Fahrzeuges 1, vorzugsweise ein Servomotor des Lenksystems 8, anzusteuern ist, um den lateralen Anteil der Soll-Anforderungen AS12 umzusetzen.

Die so ermittelten Stellgrößen GA10, GB10, GL10 werden in einem vierten Schritt ST4 über ein erstes Antriebs-Stellsignal SA10 bzw. ein erstes Brems-Stellsignal SB10 bzw. ein erstes Lenk-Stellsignal SL10 ausgegeben. Das erste Antriebs-Stellsignal SA10 wird an einen ersten Eingang 13A1 einer Antriebs-Verknüpfungseinheit 13A, das erste Brems-Stellsignal SB10 an einen ersten Eingang 13B1 einer Brems-Verknüpfungseinheit 13B und das erste Lenk-Stellsignal SL10 an einen ersten Eingang 13L1 einer Lenk-Verknüpfungseinheit 13L übermittelt.

Die jeweilige Verknüpfungseinheit 13A, 13B, 13L ist dabei in der Lage, in Abhängigkeit der an ihren Eingängen 13A1, 13A2, 13A3, 13B1, 13B2, 13B3, 13L1, 13L2, 13L3 anliegenden Signale ein Verknüpfungs-Signal SVA, SVB, SVL auszugeben. In Abhängigkeit des jeweiligen Verknüpfungs-Signals SVA, SVB, SVL wird anschließend eine Antriebs-Steuereinheit 6a des Antriebssystems 6 bzw. eine Brems-Steuereinheit 7a des Bremssystems 7 bzw. eine Lenk-Steuereinheit 8a des Lenksystems 8 angesteuert. Wie das Verknüpfungs-Signal SVA, SVB, SVL in der jeweiligen Verknüpfungseinheit 13A, 13B, 13L ermittelt wird, hängt dabei von der darin gespeicherten Steuerlogik ab.

Wird von den jeweiligen Verknüpfungseinheit 13A, 13B, 13L aufgrund der darin implementierten Steuerlogik in einem fünften Schritt ST5 das erste Antriebs-Stellsignal SA10 bzw. das erste Brems-Stellsignal SB10 bzw. das erste Lenk-Stellsignal SL10 als Verknüpfungs-Signale SVA, SVB, SVL an die jeweilige Steuereinheit 6a, 7a, 8a übermittelt, können diese die jeweiligen Aktuatoren des Antriebssystems 6, d.h. z.B. den Antriebsmotor des Fahrzeuges 1, bzw. des Bremssystems 7, d.h. z.B. die Betriebsbremsen und/oder die Dauerbremsen, bzw. des Lenksystems 8, d.h. einen Servomotor, entsprechend ansteuern. Dadurch können die Soll-Anforderungen AS11, AS12, die aufgrund der festgestellten Ist-Abweichung dTS ausgegeben wurden, umgesetzt werden, um die Position P1 des Fahrzeuges 1 und die Ist-Rotation Phi-Ist zukünftig an die Soll-Trajektorie TS anzunähern.

Um eine stabile Fahrt auch bei einer derartigen automatisierten Steuerung des Fahrzeuges 1 über die erste Bewegungs-Regeleinheit 10 sicherzustellen, ist die zweite Bewegungs-Regeleinheit 20 vorgesehen, die vorzugsweise lediglich dann eingreift, wenn ungewollte Fahrzustände Z1u, z.B. stabilitätskritische Fahrzustände, zum aktuellen Zeitpunkt t0 bereits vorliegen oder diese in einem vorgegebenen Zeitraum dt zwischen dem aktuellen Zeitpunkt t0 und einem zukünftigen Zeitpunkt tZ mit hoher Wahrscheinlichkeit bevorstehen. Um dies zu erreichen, ist die zweite Bewegungs-Regeleinheit 20 dazu ausgebildet, anhand der über das Trajektorien-Signal S3a vorgegebenen Soll-Trajektorie TS sowie der über das Vorgabe-Signal S3b ausgegebenen Soll-Anforderungen AS11, AS12 und zusätzlich in Abhängigkeit von Fahrzeug-Informationen IF (Vehicle Model) sowie einer Fahrzeug-Ist-Dynamik FDIst (Ego Motion) den Zustand des Fahrzeuges 1 im Hinblick auf dessen Stabilität zu bewerten und die Bewegung des Fahrzeuges 1 in Abhängigkeit davon gezielt zu beeinflussen.

Dazu wird von der zweiten Bewegungs-Regeleinheit 20 in mehreren Stabilisierungs-Schritten ein Fahrzustand Z1 ermittelt, in dessen Abhängigkeit die Stellgrößen GA10, GB10, GL10, die aus den Soll-Anforderungen AS11, AS12 resultieren, angepasst werden. Der Fahrzustand Z1 kann beispielsweise ein ungewollter Fahrzustand Z1u sein, in dem das Fahrzeug 1 zum aktuellen Zeitpunkt t0 instabil ist und/oder eine Instabilität innerhalb des festgelegten Zeitraums dt in der Zukunft droht.

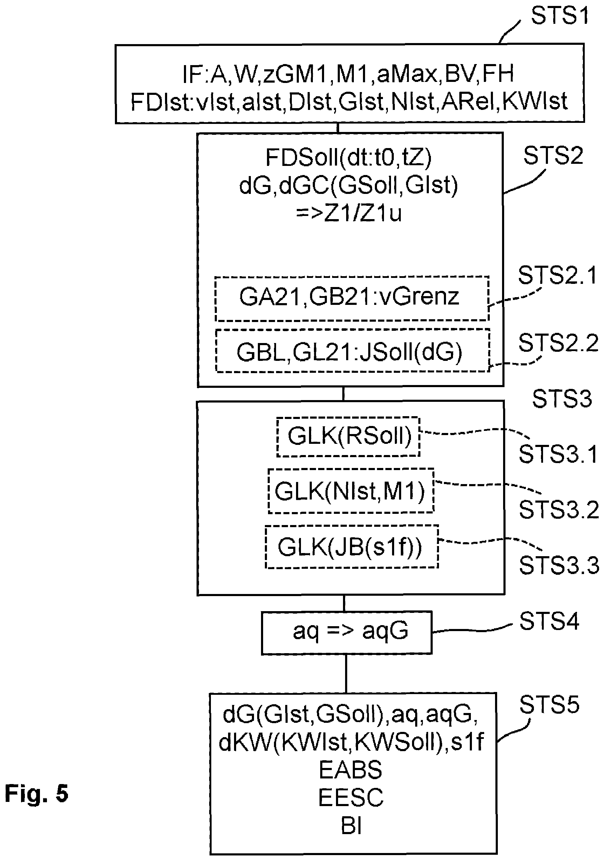

Die zweite Bewegungs-Regeleinheit 20 führt dabei die im Folgenden beschriebenen Verfahrensschritte (s. Fig. 5) fortlaufend und parallel zu den Verfahrensschritten gemäß Fig. 4 aus, die durch die erste Bewegungs-Regeleinheit 10 durchgeführt werden. Dadurch ist die zweite Bewegungs-Regeleinheit 20 in der Lage, bei Vorliegen eines ungewollten Fahrzustandes Z1u die oben beschriebene Steuerung des Fahrzeuges 1 durch die erste Bewegungs-Regeleinheit 10 gezielt anzupassen. Die zweite Bewegungs-Regeleinheit 20 hat dabei Zugriff auf jegliche Schnittstellen im Fahrzeug 1, so dass die zweite Bewegungs-Regeleinheit 20 in einem ersten Stabilisierungs-Schritt STS1 Fahrzeug-Informationen IF und/oder die Fahrzeug-Ist-Dynamik FDIst einlesen kann.

Als Fahrzeug-Informationen IF werden dabei Informationen über das Fahrzeug 1 verstanden, die nicht die Fahrdynamik betreffen, sondern das Fahrzeug 1 selbst. Darunter fallen konfigurierte Fahrzeug-Parameter wie z.B. ein Radstand A, eine Spurweite W oder eine zulässige Gesamtmasse zGM1 des Fahrzeuges 1, etc. aber auch Fahrzeug-Parameter, die sich während des Betriebs verändern können, z.B. eine aktuelle Gesamtmasse M1 des Fahrzeuges 1, ein maximales Beschleunigungsvermögen aMax (positiv oder negativ) oder ein Bremsbelag-Verschleiß BV, etc., die im Betrieb gemessen, geschätzt oder beobachtet werden. Weiterhin können auch Informationen, ob das Fahrzeug 1 einen angekuppelten Anhänger 1b aufweist, verarbeitet werden oder eine Fahrzeughöhe FH des Fahrzeuges 1.

Als Fahrzeug-Ist-Dynamik FDIst wird unter anderem die longitudinale Bewegung des Fahrzeuges 1 parallel zur Fahrtrichtung FR verstanden, die beispielsweise durch eine Ist-Geschwindigkeit vlst, eine Ist-Beschleunigung alst, einen Ist-Abstand DIst zu einem Objekt in Fahrtrichtung FR, etc. beschrieben werden kann. Weiterhin kann die Fahrzeug-Ist-Dynamik FDIst aber auch durch die Orientierung des Fahrzeuges 1 beschreibende Größen angegeben werden, beispielsweise durch eine Ist-Gierrate GIst, einen Neigungswinkel NIst gegenüber der Fahrbahn 2 oder eine relative Ausrichtung ARel des Fahrzeuges 1 gegenüber der Fahrtrichtung FR oder einen Ist-Knickwinkel KWIst zwischen einem Zugfahrzeug 1a und Anhänger 1b. Aus der Fahrzeug-Ist-Dynamik FDIst lässt sich daher sowohl die Position als auch die Orientierung (Pose) des Fahrzeuges 1 in sechs Freiheitsgraden sowie auch deren Veränderung über die jeweiligen Ableitungen ermitteln.

Die Fahrzeug-Ist-Dynamik FDIst lässt sich dabei aus Sensor-Signalen ermitteln, die eine Bewegung des Fahrzeuges 1 messen oder charakterisieren, beispielsweise durch Radgeschwindigkeits-Signale S1c von Radgeschwindigkeits-Sensoren 1c an Rädern 1f im Fahrzeug 1, Beschleunigungs-Signale S1d von Beschleunigungs-Sensoren 1d (quer und längs messend) im Fahrzeug 1 und Gierraten-Signale S1e von einem Gierraten-Sensor 1e im Fahrzeug 1. Diese Sensoren 1c, 1d, 1e sind hierbei Sensoren, die bei einem Bremssystem 7, das (teil-)elektrisch arbeitet, z.B. einem EBS (Elektronisches Bremssystem), bereits vorhanden sind, so dass darauf über eine entsprechende Schnittstelle 1g, z.B. eine CAN-Schnittstelle, zugegriffen werden kann. Ergänzend können aber auch weitere Sensoren im Fahrzeug 1 vorgesehen sein, über die beispielsweise eine niedrige Ist-Geschwindigkeit vlst, die Fahrtrichtung FR oder der Ist-Knickwinkel KWIst zwischen einem Zugfahrzeug 1a und Anhänger 1b ermittelt werden kann, um auch auf diese Informationen bezüglich der Fahrzeug-Ist-Dynamik FDIst zurückgreifen zu können. Die Sensor-Signale der einzelnen Sensoren können dabei auch fusioniert werden, um eine höhere Genauigkeit zu erzielen und/oder diese zu plausibilisieren.

In Abhängigkeit der Fahrzeug-Informationen IF und/oder der Fahrzeug-Ist-Dynamik FDIst kann die zweite Bewegungs-Regeleinheit 20 in mehreren Stabilisierungs-Schritten bewerten, ob bei Vorliegen einer Ist-Abweichung dTS für die festgelegte Soll-Trajektorie TS eine Umsetzung der von der Vorgabe-Einheit 3b ausgegebenen Soll-Anforderungen AS11, AS12 zu Instabilitäten führt oder führen würde bzw. ob sich daraus ein ungewollter Fahrzustand Z1u ergibt oder ergeben würde, sowie entsprechend darauf reagieren.

Dazu wird in der zweiten Bewegungs-Regeleinheit 20 in einem zweiten Stabilisierungs-Schritt STS2 über einen Gierraten-Regler 21 eine Gierratenüberwachung durchgeführt. Der Gierratenregler 21 ist dabei ausgebildet, die von der VD-Einheit 3a ausgegebene Soll-Trajektorie TS zu analysieren, um daraus eine Soll-Fahrdynamik FDSoll für den aktuellen Zeitpunkt t0 sowie auch für Zeitpunkte t innerhalb des vorgegebenen Zeitraums dt bis zum zukünftigen Zeitpunkt tZ, beispielsweise bis t0+10s, zu berechnen. Der Gierratenregler 21 greift dabei auf die geometrischen Trajektorien-Größen kG zurück, die den zukünftigen Fahrtweg bzw. die Soll-Trajektorie TS charakterisieren, um die Soll-Fahrdynamik FDSoll abzuschätzen. Daher werden keine Anforderungen an die Systeme 6, 7, 8 im Fahrzeug 1 ausgewertet, sondern unmittelbar die vom "Virtual Driver" (VD-Einheit 3a) vorgegebene Soll-Trajektorie TS.

Dazu kann aus den geometrischen Informationen (PSoll, PhiSoll) in der Soll-Trajektorie TS insbesondere für den aktuellen Zeitpunkt t0 z.B. über das Einspurmodell, eine Soll-Gierrate GSoll ermittelt werden. Diese Soll-Gierrate GSoll kann mit der aktuell vorliegenden Ist-Gierrate GIst, die aus der übermittelten Fahrzeug-Ist-Dynamik FDIst folgt, verglichen werden, indem beispielsweise eine Gierraten-Abweichung dG zwischen der Ist-Gierrate GIst und der Soll-Gierrate GSoll bestimmt wird. In Abhängigkeit der Gierraten-Abweichung dG kann anschließend der Fahrzustand Z1 abgeleitet werden.

Dabei kann vorgesehen sein, dass bei jeglichen Gierraten-Abweichungen dG von ungleich Null sofort ein ungewollter Fahrzustand Z1u ausgegeben wird (vgl. dGW=0). Es kann aber auch vorgesehen sein, dass eine gewisse Abweichung von der Soll-Gierrate GSoll zugelassen wird und ein ungewollter Fahrzustand Z1u erst dann ausgegeben wird, wenn z.B. die Gierraten-Abweichung dG einen festgelegten Abweichungs-Grenzwert dGW überschreitet.

Ergänzend oder alternativ können auch die von der Vorgabe-Einheit 3b ausgegebenen Soll-Anforderungen AS11, AS12, die in Abhängigkeit der geometrischen Soll-Trajektorie TS gebildet sind, berücksichtigt werden, um bei der Ermittlung der Soll-Gierrate GSoll den nachfolgend angeforderten Fahrzustand des Fahrzeuges 1 zu berücksichtigen.

In Abhängigkeit des abgeleiteten Fahrzustandes Z1 und damit der Gierraten-Abweichung dG kann dann in einem ersten Unterschritt STS2.1 eine Limitierung der Fahrzeug-Ist-Geschwindigkeit vIst auf eine Grenz-Geschwindigkeit vGrenz erfolgen. Dazu kann von dem Gierratenregler 21 ein erstes Antriebs-Stabilisierungs-Signal SA21 mit einer ersten Antriebs-Stabilitätsgröße GA21, beispielsweise einem Antriebskraft-Limit, an den zweiten Eingang 13A2 der Antriebs-Verknüpfungseinheit 13A ausgeben werden. Aufgrund dessen wird von der Antriebs-Verknüpfungseinheit 13A ein Antriebs-Verknüpfungs-Signal SVA ausgegeben, mit dem das Fahrzeug 1 bei einer Ansteuerung des Antriebsmotors als Aktuator des Antriebssystems 6 eine vorgegebene Grenz-Geschwindigkeit vGrenz, die mit dem Antriebskraft-Limit verknüpft ist, nicht übersteigt. Die Antriebs-Stellgröße GA10 am ersten Eingang 13A1 der Antriebs-Verknüpfungseinheit 13A wird bei Vorliegen eines ungewollten Fahrzustandes Z1u also angepasst.

Wird die Grenz-Geschwindigkeit vGrenz bereits überschritten, wird von dem Gierratenregler 21 ein erstes Brems-Stabilisierungs-Signal SB21 mit einer ersten Brems-Stabilitätsgröße GB21, beispielsweise einer Bremskraft, an den zweiten Eingang 13B2 die Brems-Verknüpfungseinheit 13B ausgegeben. Aufgrund dessen wird von der Brems-Verknüpfungseinheit 13B ein Brems-Verknüpfungs-Signal SVB ausgegeben, mit dem das Fahrzeug 1 bei einer Ansteuerung der Bremsen und/oder der Dauerbremsen als Aktuator des Bremssystems 7 derartig abgebremst wird, dass das Fahrzeug 1 die vorgegebene Grenz-Geschwindigkeit vGrenz erreicht oder zumindest nicht übersteigt. Damit wird die Brems-Stellgröße GB10, die aus der longitudinalen Soll-Anforderung AS11 resultiert, gezielt in Abhängigkeit des Fahrzustandes Z1 bzw. des ungewollten Fahrzustandes Z1u angepasst.

In einem zweiten Unterschritt STS2.2 kann in Abhängigkeit des Fahrzustandes Z1 alternativ oder ergänzend ein Soll-Giermoment JSoll vorgegeben werden, das die Gierraten-Abweichung dG kompensieren kann. Dieses Soll-Giermoment JSoll kann z.B. durch eine radindividuelle Ansteuerung des Bremssystems 7 umgesetzt werden, um eine Lenkbremsung zu erreichen. Dazu kann von dem Gierratenregler 21 ein zweites Brems-Stabilisierungs-Signal SBL mit einer zweiten Brems-Stabilitätsgröße GBL, z.B. radindividuellen Bremskräften, an die Brems-Steuereinrichtung 7a des Bremssystems 7 ausgegeben werden, der diese radindividuelle Ansteuerung der Bremsen übernimmt, um damit die Gierraten-Abweichung dG zu kompensieren. Auch dadurch wird die Brems-Stellgröße GB10, die aus der longitudinalen Soll-Anforderung AS11 resultiert, gezielt in Abhängigkeit des Fahrzustandes Z1 bzw. des ungewollten Fahrzustandes Z1u angepasst, da sich eine andere Bremskraftverteilung auf die einzelnen Räder sowie ggf. auch eine angepasste Gesamt-Bremskraft ergibt.

Alternativ oder ergänzend kann das Soll-Giermoment JSoll auch durch eine Ansteuerung des Lenksystems 8 umgesetzt werden, um ein Gegenlenken zu bewirken. Dadurch kann berücksichtigt werden, dass die Bremskraft zum Lenkbremsen über das zweite Brems-Stabilisierungs-Signal SBL bzw. die zweite Brems-Stabilitätsgröße GBL zum einen nicht unbegrenzt an einzelnen Rädern erhöht werden kann und zum anderen bei jeder Verringerung der Bremskraft an einzelnen Rädern eine insgesamt verringerte Gesamt-Bremskraft und damit ein erhöhter Bremsweg resultiert. Um ein derartiges eigenständiges oder zumindest unterstützendes Gegenlenken durch das Lenksystems 8 zu erreichen, wird von dem Gierratenregler 21 ein erstes Lenk-Stabilisierungs-Signal SL21 mit einer ersten Lenk-Stabilitätsgröße GL21, beispielsweise einem Lenkwinkel, erzeugt, mit der das Soll-Giermoment JSoll voll oder zumindest anteilig (bei einer Kombination mit der Lenkbremsung) bewirkt werden kann.

Dieses erste Lenk-Stabilisierungs-Signal SL21 wird anschließend an den zweiten Eingang 13L2 der Lenk-Verknüpfungseinheit 13L ausgegeben. Aufgrund dessen wird von der Lenk-Verknüpfungseinheit 13L ein Lenk-Verknüpfungs-Signal SVL ausgegeben, mit dem das Fahrzeug 1 bei einer Ansteuerung des Lenksystems 8, beispielsweise über einen Servomotor als Aktuator des Lenksystems 8, derartig gelenkt wird, dass das Soll-Giermoment JSoll voll oder zumindest anteilig bewirkt wird. Das erste Lenk-Stabilisierungs-Signal SL21 kann, je nach Fahrsituation, einer bereits vorliegenden Lenkung (Lenk-Stellsignal SL10) durch die Lenk-Verknüpfungseinheit 13L zumindest anteilig überlagert werden. Auch dadurch wird die Lenk-Stellgröße GL10, die aus der lateralen Soll-Anforderung AS11 resultiert, gezielt in Abhängigkeit des Fahrzustandes Z1 bzw. des ungewollten Fahrzustandes Z1u angepasst.

Die beschriebene Überwachung der Gierraten-Abweichung dG kann auch auf andere Zeitpunkte t innerhalb des festgelegten Zeitraums zwischen t0 und dt ausgedehnt werden. Dabei kann anhand der geometrisch beschriebenen Soll-Trajektorie TS vorausschauend abgeschätzt werden, wie sich die Ist-Gierrate GIst in Zukunft relativ zur Soll-Gierrate GSoll, die aus der Soll-Trajektorie TS hergeleitet wird, verhalten wird bzw. wie sich die Gierraten-Abweichung dG zeitlich verändern wird. So kann durch eine Analyse einer Gierraten-Abweichungs-Änderung dGC beispielsweise ein beginnendes Untersteuern oder Übersteuern oder ein Beibehalten der Soll-Trajektorie TS aber nur mit stark ansteigendem Lenkwinkel erkannt werden. Anhand der geometrischen Soll-Trajektorie TS kann also vorrausschauend beurteilt werden, ob sich im Hinblick auf das Gierverhalten des Fahrzeuges 1 mit hoher Wahrscheinlichkeit ein ungewollter Fahrzustand Z1u einstellt, wenn sich beispielsweise der Soll-Kurvenradius RSoll der Soll-Trajektorie TS weiter verkleinert, oder ein ungewollter Fahrzustand Z1u ggf. vermieden werden kann, wenn der Soll-Kurvenradius RSoll wieder größer wird. Über die Stabilisierungsschritte STS2, STS2.1, STS2.2 kann auch darauf adäquat reagiert werden.

In einem dritten Stabilisierungsschritt STS3 kann eine Lenkwinkelkorrektur vorgenommen werden, was in einer Korrektureinheit 22 erfolgt. Bei niedrigen Ist-Geschwindigkeiten vIst des Fahrzeuges 1 und bei stabiler Fahrt auf Fahrbahnen 2 mit hohem Reibwert folgt die Lenk-Stellgröße GL10, die über die laterale Soll-Anforderung AS12 angewiesen wird, hauptsächlich aus der Fahrzeuggeometrie, d.h. beispielsweise dem Radstand A, der Spurweite W, dem Ist-Knickwinkel KWIst, etc., unter Berücksichtigung von kleineren Korrekturen. Liegen jedoch eine komplexere Dynamik bzw. höhere Ist-Geschwindigkeiten vIst und/oder eine Fahrbahn 2 mit geringen Reibwerten vor, so sind weitere Korrekturen nötig. Der Fahrzustand Z1 ohne diese weiteren Korrekturen kann also als ungewollter Fahrzustand Z1u gewertet werden, so dass durch die Korrektureinheit 22 die folgenden Korrekturen vorgenommen werden:

In einer Variante (STS3.1) kann nach einem "linear bicycle model" das Eigenlenk-Verhalten des Fahrzeuges 1 berücksichtigt werden, wobei die Korrektur-Einheit 22 über ein zweites Lenk-Stabilisierungs-Signal SLK eine zweite Lenk-Stabilitätsgröße GLK, beispielsweise einen Lenkwinkel, ausgibt, die an einen dritten Eingang 13L3 der Lenk-Verknüpfungseinheit 13L übermittelt wird. Die Ermittlung der zweiten Lenk-Stabilitätsgröße GLK erfolgt dabei in Abhängigkeit der aktuellen Fahrzeug-Ist-Dynamik FDIst sowie auch in Abhängigkeit der Fahrzeug-Informationen IF, mit denen über das "linear bicycle model" ermittelt werden kann, wie der Lenkwinkel bzw. die Lenk-Stellgröße GL10 in Abhängigkeit der Ist-Geschwindigkeit vIst des Fahrzeuges 1 und/oder des aus der Soll-Trajektorie TS abgeleiteten Soll-Kurvenradius RSoll anzupassen ist, um einen ungewollten Fahrzustand Z1u zu verhindern oder abzustellen. Der Soll-Kurvenradius RSoll folgt dabei vorzugsweise aus der ebenfalls an die zweite Bewegungs-Regeleinheit 20 übermittelten lateralen Soll-Anforderung AS12, die von der Vorgabe-Einheit 3b ermittelt wird. Über die Lenk-Verknüpfungseinheit 13L kann die laterale Soll-Anforderung AS12 bzw. die Lenk-Stellgröße GL10 in entsprechender Weise über eine darin implementierte Steuerlogik in Abhängigkeit der zweiten Lenk-Stabilitätsgröße GLK angepasst werden, woraufhin ein entsprechendes Lenk-Verknüpfungs-Signal SVL ausgegeben wird.

Weiterhin kann in der Korrektureinheit 22 in Abhängigkeit der Fahrzeug-Ist-Dynamik FDIst über ein dynamisches Model das Verhalten des Fahrzeuges 1 auf einer reibungszahlgeteilten Fahrbahn 2 (µ-split) ermittelt werden (STS3.2), was zu einem ungewollten Fahrzustand Z1u aufgrund eines wirkenden Brems-Giermomentes JB führen kann. Dazu kann beispielsweise auf Radschlupfe s1f von Rädern 1f des Fahrzeuges 1 zurückgegriffen werden, die über die Radgeschwindigkeits-Signale S1c der Radgeschwindigkeitssensoren 1c ermittelt werden. Aus diesen kann eine Ist-Gierrate GIst des Fahrzeuges 1 ermittelt und diese mit der aus der Soll-Trajektorie TS oder der lateralen Soll-Anforderung AS12 folgenden Soll-Gierrate GSoll verglichen werden. Aus der daraus folgenden Gierraten-Abweichung dG kann von der Korrektureinheit 22 ebenfalls eine zweite Lenk-Stabilitätsgröße GLK ermittelt werden, die beschreibt, welches Brems-Giermoment JB aufgrund der Bremsung auf der reibungszahlgeteilten Fahrbahn 2 durch eine Lenkung auszugleichen ist, um auch weiterhin eine stabile Fahrt sicherzustellen und dem ungewollten Fahrzustand Z1u zu beheben. Wird die Lenk-Stellgröße GL10 mit dieser zweiten Lenk-Stabilitätsgröße GLK in der Lenk-Verknüpfungseinheit 13L korrigiert bzw. angepasst, kann ein derartiges Brems-Giermoment JB ausgeglichen werden, wenn das Lenksystem 8 mit einem entsprechenden Lenk-Verknüpfungs-Signal SVL angesteuert wird.

In der Korrektureinheit 22 kann weiterhin berücksichtigt werden, welchen Neigungswinkel NIst das Fahrzeug 1 gegenüber der Fahrbahn 2 aufweist (STS3.3). Ein höherer Neigungswinkel NIst ist dabei durch die Lenkung zu kompensieren, um einen stabilen Fahrzustand beizubehalten bzw. einen ungewollten Fahrzustand Z1u zu vermeiden. Dazu kann in der Korrektureinheit 22 ein Model angenommen werden, in dem die Neigung des Fahrzeuges 1 bzw. der Neigungswinkel NIst sowie die aktuelle Fahrzeugmasse M1 verwendet werden, um die zweite Lenk-Stabilitätsgröße GLK zu ermitteln. Wird die Lenk-Stellgröße GL10 mit dieser zweiten Lenk-Stabilitätsgröße GLK in der Lenk-Verknüpfungseinheit 13L korrigiert, kann eine Neigungskorrektur stattfinden, wenn das Lenksystems 8 mit einem entsprechenden Lenk-Verknüpfungs-Signal SVL angesteuert wird.

Neben den beschriebenen Korrekturen sind auch weitere Korrekturen durch die Korrektureinheit 22 möglich, um auf ungewollte Fahrzustände Z1u zu reagieren.

Neben dem Gierratenregler 21 und der Korrektureinheit 22 ist in der zweiten Bewegungsregeleinheit 20 weiterhin eine RSC-Einheit 23 (RSC, Roll Stability Control) vorgesehen, mit der in einem vierten Stabilisierungs-Schritt STS4 ein Umkippen des Fahrzeuges 1 als ungewollter Fahrzustand Z1u verhindert werden kann. Die RSC-Einheit 23 überwacht dabei insbesondere eine Querbeschleunigung aq des Fahrzeuges 1 zum aktuellen Zeitpunkt t0, die z.B. aus den Beschleunigungs-Signalen S1d der Beschleunigungssensoren 1d folgt.

Überschreitet die Querbeschleunigung aq eine Grenz-Querbeschleunigung aqG, so wird von der RSC-Einheit 23 auf einen ungewollten Fahrzustand Z1u geschlossen und daraufhin eine zweite Antriebs-Stabilitätsgröße GA23, beispielsweise ein Antriebskraft-Limit, und/oder eine dritte Brems-Stabilitätsgröße GB23, beispielsweise eine Bremskraft, ausgegeben, die über entsprechende Signale SA23, SB23 an dritte Eingänge 13A3, 13B3 der Antriebs-Verknüpfungseinheit 13A bzw. der Brems-Verknüpfungseinheit 13B ausgegeben wird. In den Verknüpfungseinheiten 13A, 13B wird ein entsprechenden Verknüpfungssignal SVA, SVB generiert, um das Antriebssystem 6 bzw. das Bremssystem 7 entsprechend anzusteuern und das Fahrzeug 1 abzubremsen, so dass die Querbeschleunigung aq wieder auf oder unter die Grenz-Querbeschleunigung aqG abfällt und der ungewollte Fahrzustand Z1u behoben wird.

Zudem kann die RSC-Einheit 23 über die Soll-Trajektorie TS auch auf die geometrischen bzw. kinematischen Trajektorien-Größen kG der zukünftigen Bewegung des Fahrzeuges 1 zurückgreifen, um zu bewerten, ob die Querbeschleunigung aq zwischen dem aktuellen Zeitpunkt t0 und dem zukünftigen Zeitpunkt tZ die Grenz-Querbeschleunigung aqG überschreiten wird, wenn sich das Fahrzeug 1 z.B. mit der aktuellen Ist-Geschwindigkeit vlst weiterbewegt. Die RSC-Einheit 23 kann dann die dritte Brems-Stabilitätsgröße GB23 und/oder die zweite Antriebs-Stabilitätsgröße GA23 auch bereits vorausschauend an die Brems-Verknüpfungseinheit 13B bzw. die Antriebs-Verknüpfungseinheit 13A ausgeben, um das Überschreiten der Grenz-Querbeschleunigung aqG nicht eintreten zu lassen. Damit kann ein in der Zukunft liegender ungewollter Fahrzustand Z1u ermittelt und auf diesen vorausschauend reagiert werden.

In einem fünften Stabilisierungs-Schritt STS5 kann vorgesehen sein, in einem Stabilisierungs-Monitor 24 ein Rück-Signal SR zu erzeugen und dieses an die VD-Einheit 3a zu übertragen. Das Rück-Signal SR ist dabei abhängig von dem aktuellen und/oder dem zukünftigen Fahrverhalten bzw. dem aktuellen und/oder dem zukünftigen Fahrzustand Z1 des Fahrzeuges 1, der in den jeweiligen Einheiten 21, 22, 23 ständig ermittelt wird. Der aktuelle bzw. zukünftige Fahrzustand Z1 kann daher beispielsweise folgen aus:
- der Gierraten-Abweichung dG, wie zum zweiten Stabilisierungs-Schritt STS2 beschrieben, und/oder
- dem drohenden Umkippen des Fahrzeuges 1 über die Querbeschleunigung aq, wie zum vierten Stabilisierungs-Schritt STS4 beschrieben, und/oder
- einer Knickwinkel-Abweichung dKW zwischen dem aktuellen Ist-Knickwinkel KWIst und einem Soll-Knickwinkel KWSoll, der aus der Soll-Trajektorie TS abgeschätzt werden kann, und/oder
- einem Radschlupf s1f der einzelnen Räder 1f des Fahrzeuges 1 und/oder
- dem Vorliegen eines ABS-Eingriffes EABS oder eines ESC-Eingriffes EESC und/oder
- einer Beladungsinformation BI, z.B. eine Achslastinformation oder einer Schwerpunktsinformation oder einer Schwingungsinformation der Beladung, etc.. Auch die Änderung von einzelnen der o.g. Größen über die Zeit können in dem Rück-Signal SR berücksichtigt werden.

Das Rück-Signal SR kann beispielsweise einen zeitabhängigen Stabilitäts-Indikator SI enthalten, der durch den Stabilisierungs-Monitor 24 anhand der aktuellen Fahrzeug-Ist-Dynamik FDIst sowie der Soll-Trajektorie TS ermittelt wird und der daher den aktuellen und/oder den zukünftigen Fahrzustand Z1 mit den aufgezählten Größen bewertet. Der Stabilitäts-Indikator SI kann beispielsweise ein Wert zwischen 0% und 100% oder 0 und 1 sein und eine zeitabhängige Wahrscheinlichkeit für eine Instabilität bzw. einen ungewollten Fahrzustand Z1u zu einem bestimmten Zeitpunkt t zwischen dem aktuellen Zeitpunkt t0 und dem zukünftigen Zeitpunkt tZ angeben.

Die VD-Einheit 3a kann dieses Rück-Signal SR bzw. den Stabilitäts-Indikator SI für eine Anpassung der aktuellen Soll-Trajektorie TS bzw. der Trajektorien-Größen kG (PSoll(x, y), PhiSoll) verwenden. Die VD-Einheit 3a kann dann basierend auf der angepassten Soll-Trajektorie TSa, die dann ebenfalls ausschließlich durch geometrische Größen (PSoll(x, y), PhiSoll) beschrieben wird, eine angepasste Ist-Abweichung dTSa für den aktuellen Zeitpunkt t0 ermitteln und ausgegeben, die den ermittelten aktuellen und/oder zukünftigen Fahrzustand Z1 bereits berücksichtigt. Für die angepasste Soll-Trajektorie TSa ändert sich dann entsprechend auch der Stabilitäts-Indikator SI. Basierend auf der angepassten Ist-Abweichung dTSa werden dann Soll-Anforderungen AS11, AS12 von der Vorgabe-Einheit 3b ermittelt und ausgegeben, die den aktuellen und/oder zukünftigen Fahrzustand Z1 berücksichtigen. Damit findet quasi bereits vorausschauend eine Anpassung der Stellgrößen GA10, GB10, GL10 in Abhängigkeit des ermittelten Fahrzustandes Z1 statt.

Daher kann ein stabilisierender Eingriff durch die zweite Bewegungs-Regeleinheit 20 dadurch verhindert werden, dass die zweite Bewegungs-Regeleinheit 20 in Abhängigkeit der geometrisch vorgegebenen Soll-Trajektorie TS vorausschauend beurteilt, ob es bei Beibehaltung dieser Soll-Trajektorie TS zu einer Instabilität bzw. zu einem ungewollten Fahrzustand Z1u kommen würde. Der virtuelle Fahrer, der durch die VD-Einheit 3a verwirklicht ist, kann sein geplantes Fahrverhalten entsprechend anpassen, indem eine angepasste Soll-Trajektorie TSa gewählt und ausgegeben wird. Dadurch können Grenzwerte, ab denen eine Instabilität für möglich gehalten wird, für die zukünftige Fahrt angepasst werden, da eine vorrausschauende Beurteilung erfolgt. Zudem können weitere Parameter mit einbezogen werden.

In den Stabilisierungs-Schritten STS2, STS3, STS4, STS5 wird demnach die ursprünglich von der ersten Bewegungs-Regeleinheit 10 vorgegebene Bewegung des Fahrzeuges 1 (Stellgrößen GA10, GB10, GL10) in situ oder vorausschauend in Abhängigkeit des Fahrzustandes Z1 angepasst, um einen ungewollten Fahrzustand Z1u, z.B. eine erkannte oder drohende Instabilität, zu unterbinden bzw. zu verhindern. Die einzelnen Stabilisierungs-Schritte STS2, STS3, STS4, STS5 werden dabei parallel zueinander ausgeführt.

### Bezugszeichenliste (Teil der Beschreibung)

- 1: Fahrzeug
- 1a: Zugfahrzeug
- 1b: Anhänger
- 1c: Radgeschwindigkeits-Sensor
- 1d: Beschleunigungs-Sensor
- 1e: Gierraten-Sensor
- 1f: Räder des Fahrzeuges 1
- 1g: Schnittstelle, z.B. CAN-Schnittstelle
- 2: Fahrbahn
- 3: Fahrt-Steuereinrichtung
- 3a: VD-Einheit (Virtual Driver)
- 3b: Vorgabe-Einheit (Motion Control)
- 4: Sensor
- 5: Umgebungserfassungssystem
- 6: Antriebssystem
- 6a: Antriebs-Steuereinheit
- 7: Bremssystem
- 7a: Brems-Steuereinheit
- 8: Lenksystem
- 8a: Lenk-Steuereinheit
- 10: erste Bewegungs-Regeleinheit
- 11: Longitudinal-Regler
- 12: Lateral-Regler
- 13A: Antriebs-Verknüpfungseinheit
- 13A1, 13A2, 13A3: Eingänge der Antriebs-Verknüpfungseinheit
- 13B: Brems-Verknüpfungseinheit
- 13B1, 13B2, 13B3: Eingänge der Brems-Verknüpfungseinheit
- 13L: Lenk-Verknüpfungseinheit
- 13L1, 13L2, 13L3: Eingänge der Lenk-Verknüpfungseinheit
- 20: zweite Bewegungs-Regeleinheit
- 21: Gierraten-Regler
- 22: Korrektureinheit
- 23: RSC-Einheit
- 24: Stabilisierungs-Monitor
- alst: Ist-Beschleunigung
- aMax: maximale Beschleunigungsvermögen
- aq: Querbeschleunigung
- aqG: Grenz-Querbeschleunigung
- aSoll: Soll-Beschleunigung
- A: Radstand
- ARel: relative Ausrichtung des Fahrzeuges 1
- AS11: longitudinale Soll-Anforderungen
- AS12: laterale Soll-Anforderungen
- BI: Beladungs-Information
- BV: Bremsverschleiß
- dt: Zeitraum
- dG: Gierraten-Abweichung
- dGC: Gierraten-Abweichungs-Änderung
- dGW: Abweichungs-Grenzwert
- dPhi: Rotations-Abweichung
- dKW: Knickwinkel-Abweichung
- dRSoll: Soll-Kurvenradius-Änderung
- dTS: Ist-Abweichung
- dTSa: angepasste Ist-Abweichung
- DIst: Ist-Abstand
- EABS: ABS-Eingriff
- EESC: ESC-Eingriff
- FDIst: Fahrzeug-Ist-Dynamik
- FDSoll: Fahrzeug-Soll-Dynamik
- FR: Fahrtrichtung
- GA10: Antriebs-Stellgröße
- GA21: erste Antriebs-Stabiltätsgröße
- GA23: zweite Antriebs-Stabiltätsgröße
- GB10: Brems-Stellgröße
- GB21: erste Brems-Stabiltätsgröße
- GB23: dritte Brems-Stabiltätsgröße
- GBL: zweite Brems-Stabiltätsgröße
- GIst: Ist-Gierrate
- GSoll: Soll-Gierrate
- GL10: Lenk-Stellgröße
- GL21: erste Lenk-Stabilitätsgröße
- GLK: zweite Lenk-Stabiltätsgröße
- IF: Fahrzeug-Informationen
- JB: Brems-Giermoment
- JSoll: Soll-Giermoment
- kG: Trajektorien-Größen
- KWIst: Ist-Knickwinkel
- KWSoll: Soll-Knickwinkel
- M1: aktuelle Gesamtmasse des Fahrzeuges 1
- NIst: Neigungswinkel
- P1: Position des Fahrzeuges 1
- Philst: Ist-Rotation des Fahrzeuges 1
- PhiSoll: Soll-Rotation des Fahrzeuges 1
- PSoll: Soll-Position des Fahrzeuges 1
- RSoll: Soll-Kurvenradius
- s1f: Radschlupf
- S1c: Radgeschwindigkeits-Signal
- S1d: Beschleunigungs-Signal
- S1e: Gierraten-Signal
- S3a: Trajektorien-Signal
- S3b: Vorgabe-Signal
- S4: Sensor-Signal
- SA10: Antriebs-Stellsignal
- SA21: erstes Antriebs-Stabilisierungssignal
- SA23: zweites Antriebs-Stabilisierungssignal
- SB10: Brems-Stellsignal
- SB21: erstes Brems-Stabilisierungssignal
- SB23: drittes Brems-Stabilisierungssignal
- SBL: zweites Brems-Stabilisierungssignal
- SL10: Lenk-Stellsignal
- SL21: erstes Lenk-Stabilisierungssignal
- SLK: zweites Lenk-Stabilisierungssignal
- SI: Stabilitäts-Indikator
- SR: Rück-Signal
- SVA: Antriebs-Verknüpfungs-Signal
- SVB: Brems-Verknüpfungs-Signal
- SVL: Lenk-Verknüpfungs-Signal
- t: Zeitpunkt
- t0: aktueller Zeitpunkt
- tZ: zukünftiger Zeitpunkt
- TS: Soll-Trajektorie
- TSa: angepasste Soll-Trajektorie
- U: Umgebung
- vlst: Ist-Geschwindigkeit
- vSoll: Soll-Geschwindigkeit
- W: Spurweite
- x: x-Koordinate
- y: y-Koordinate
- zGM1: zulässige Gesamtmasse des Fahrzeuges 1
- Z1: Fahrzustand
- Z1u: ungewollter Fahrzustand

## Patentansprüche

1. Verfahren zum automatisierten Führen eines Fahrzeuges (1) entlang einer vorgegebenen Soll-Trajektorie (TS) mit einer Ist-Geschwindigkeit (vlst), wobei die Soll-Trajektorie (TS) durch geometrische Trajektorien-Größen (kG) charakterisiert ist, mit mindestens den folgenden Schritten:
- Ermitteln einer Ist-Abweichung (dTS) des Fahrzeuges (1) von der Soll-Trajektorie (TS) (ST1);
- Ausgeben der ermittelten Ist-Abweichung (dTS) an eine Steuereinheit (10, 20, 30) und Erzeugen von Stellgrößen (GA10, GB10, GL10) in der Steuereinheit (10, 20, 30) in Abhängigkeit der ermittelten Ist-Abweichung (dTS) (ST3) derartig, dass sich das Fahrzeug (1) bei einer automatisierten Ansteuerung eines Antriebssystems (7) und/oder eines Bremssystems (8) und/oder eines Lenksystems (9) des Fahrzeuges (1) in Abhängigkeit der erzeugten Stellgrößen (GA10, GB10, GL10) an die Soll-Trajektorie (TS) annähert, wenn das Fahrzeug (1) von der Soll-Trajektorie (TS) abweicht, **gekennzeichnet durch** die weiteren Schritte;
- Ermitteln in der Steuereinheit (10, 20, 30), ob für einen zukünftigen Zeitpunkt (tZ) ein in Bezug auf Stabilität ungewollter Fahrzustand (Z1u) vorliegt, wenn sich das Fahrzeug (1) in Abhängigkeit der erzeugten Stellgrößen (GA10, GB10, GL10) an die Soll-Trajektorie (TS) annähert, wobei der ungewollte Fahrzustand (Z1u) aus der vorgegebenen Soll-Trajektorie (TS) in Abhängigkeit der geometrischen Trajektorien-Größen (kG) ermittelt wird (STS2, STS3, STS4, STS5); und
- wenn das Vorliegen des ungewollten Fahrzustandes (Z1u) für einen zukünftigen Zeitpunkt (tZ) festgestellt wird
-- automatisiertes Ansteuern des Fahrzeuges (1) (ST5) in Abhängigkeit von in der Steuereinheit (10, 20, 30) erzeugten Stabilitätsgrößen (GA21, GA23, GB21, GB23, GBL, GL21, GLK) und/oder
-- Anpassen der empfangenen Soll-Trajektorie (TS) (STS5).

2. Verfahren nach Anspruch 1, **dadurch gekennzeichnet, dass** das Ermitteln, ob für einen zukünftigen Zeitpunkt (tZ) ein ungewollter Fahrzustand (Z1u) vorliegt, ergänzend in Abhängigkeit von Fahrzeug-Informationen (IF) über das Fahrzeug (1) und/oder von einer Fahrzeug-Ist-Dynamik (FDIst) des Fahrzeuges (1) und/oder von Soll-Anforderungen (AS11, AS12) zum Ansteuern des Antriebssystems (7) und/oder des Bremssystems (8) und/oder des Lenksystems (9) erfolgt.

3. Verfahren nach Anspruch 2, **dadurch gekennzeichnet, dass** die Soll-Anforderungen (AS11, AS12) in Abhängigkeit der Ist-Abweichung (dTS) ermittelt werden, wobei
- über longitudinale Soll-Anforderungen (AS11) eine in Fahrtrichtung (FR) des Fahrzeuges (1) abweichende Position (P1) und/oder Ist-Rotation (Philst) des Fahrzeuges (1) von der Soll-Trajektorie (TS) korrigiert wird, und
- über laterale Soll-Anforderungen (AS12) eine senkrecht zur Fahrtrichtung (FR) abweichende Position (P1) und/oder Ist-Rotation (Philst) des Fahrzeuges (1) von der Soll-Trajektorie (TS) korrigiert wird.

4. Verfahren nach einem der vorhergehenden Ansprüche, **dadurch gekennzeichnet, dass** als Stellgrößen (GA10, GB10, GL10) in Abhängigkeit der Ist-Abweichung (dTS) eine Antriebs-Stellgröße (GA10) und/oder eine Brems-Stellgröße (GB10) und/oder eine Lenk-Stellgröße (GL10) ermittelt werden, wobei
- das Antriebssystem (6) des Fahrzeuges (1) in Abhängigkeit der Antriebs-Stellgröße (GA10) und
- das Bremssystem (7) des Fahrzeuges (1) in Abhängigkeit der Brems-Stellgröße (GB10) und
- das Lenksystem (8) des Fahrzeuges (1) in Abhängigkeit der Lenk-Stellgröße (GL10)
automatisiert angesteuert werden können, um die Position (P1) und/oder Ist-Rotation (Philst) des Fahrzeuges (1) an die Soll-Trajektorie (TS) anzunähern.

5. Verfahren nach einem der vorhergehenden Ansprüche, **dadurch gekennzeichnet, dass** das Vorliegen eines ungewollten Fahrzustandes (Z1u) ermittelt wird, wenn aus der vorgegebenen Soll-Trajektorie (TS) in Abhängigkeit der geometrischen Trajektorien-Größen (kG) folgt, dass dem Fahrzeug (1) zu ein instabiler Zustand für einen zukünftigen Zeitpunkt (tZ) droht.

6. Verfahren nach einem der vorhergehenden Ansprüche, **dadurch gekennzeichnet, dass** das Vorliegen eines ungewollten Fahrzustandes (Z1u) ermittelt wird, wenn eine Gierraten-Abweichung (dG) zwischen einer Soll-Gierrate (GSoll) und einer Ist-Gierrate (GIst) für einen zukünftigen Zeitpunkt (tZ) einen Abweichungs-Grenzwert (dGW) überschreitet, wobei die Soll-Gierrate (GSoll) für einen zukünftigen Zeitpunkt (tZ) mittelbar oder unmittelbar aus der vorgegebenen Soll-Trajektorie (TS) in Abhängigkeit der geometrischen Trajektorien-Größen (kG) folgt.

7. Verfahren nach Anspruch 6, **dadurch gekennzeichnet, dass** bei einem Überschreiten des Abweichungs-Grenzwertes (dGW) in Abhängigkeit der Gierraten-Abweichung (dG) als Stabilitätsgröße (GA21, GB21)
- eine erste Antriebs-Stabilitätsgröße (GA21) zum Begrenzen der Ist-Geschwindigkeit (vlst) des Fahrzeuges (1) und/oder
- eine erste Brems-Stabilitätsgröße (GB21) zum Reduzieren der Ist-Geschwindigkeit (vlst) des Fahrzeuges (1)
derartig erzeugt und ausgegeben wird, dass bei einer automatisierten Ansteuerung des Fahrzeuges (1) (ST5) in Abhängigkeit der ersten Antriebs-Stabilitätsgröße (GA21) und/oder der ersten Brems-Stabilitätsgröße (GB21) die Ist-Geschwindigkeit (vIst) des Fahrzeuges (1) eine vorgegebene Grenzgeschwindigkeit (vGrenz) nicht übersteigt (STS2.1).

8. Verfahren nach Anspruch 6 oder 7, **dadurch gekennzeichnet, dass** bei einem Überschreiten des Abweichungs-Grenzwert (dGW) in Abhängigkeit der Gierraten-Abweichung (dG) als Stabilitätsgröße (GBL, GL21)
- eine zweite Brems-Stabilitätsgröße (GBL) zum radindividuellen Abbremsen des Fahrzeuges (1) und/oder
- eine erste Lenk-Stabilitätsgröße (GL21) zum Lenken des Fahrzeuges (1)
derartig erzeugt und ausgegeben wird, dass sich bei einer automatisierten Ansteuerung des Fahrzeuges (1) (ST5) in Abhängigkeit der zweiten Brems-Stabilitätsgröße (GBL) und/oder der ersten Lenk-Stabilitätsgröße (GL21) die Ist-Gierrate (GIst) an die Soll-Gierrate (GSoll) annähert (STS2.2).

9. Verfahren nach einem der vorhergehenden Ansprüche, **dadurch gekennzeichnet, dass** eine zweite Lenk-Stabilitätsgröße (GLK) erzeugt und ausgegeben wird zum Verhindern eines ungewollten Fahrzustandes (Z1u), wobei die zweite Lenk-Stabilitätsgröße (GLK) erzeugt wird in Abhängigkeit
- der Ist-Geschwindigkeit (vIst) des Fahrzeuges (1) und/oder eines aus der Soll-Trajektorie (TS) abgeleiteten Soll-Kurvenradius (RSoll) (STS3.1), und/oder
- eines Brems-Giermoments (JB), wobei das Brems-Giermoment (JB) in Abhängigkeit von seitenweise unterschiedlich wirkenden Radschlupfen (s1f) an Rädern (1f) des Fahrzeuges (1) ermittelt wird (STS3.2), und/oder
- eines Neigungswinkels (NIst) des Fahrzeuges (1) gegenüber der Fahrbahn (2) unter Berücksichtigung einer aktuellen Fahrzeugmasse (M1) (ST3.3).

10. Verfahren nach einem der vorherigen Ansprüche, **dadurch gekennzeichnet, dass** das Vorliegen eines ungewollten Fahrzustandes (Z1u) ermittelt wird, wenn eine Querbeschleunigung (aq) des Fahrzeuges (1) für einen zukünftigen Zeitpunkt (tZ) eine Grenz-Querbeschleunigung (aqG) überschreitet (STS4).

11. Verfahren nach Anspruch 10, **dadurch gekennzeichnet, dass** die Querbeschleunigung (aq) für den zukünftigen Zeitpunkt (tZ) aus der vorgegebenen Soll-Trajektorie (TS) in Abhängigkeit der geometrischen Trajektorien-Größen (kG) abgeschätzt wird.

12. Verfahren nach Anspruch 10 oder 11, **dadurch gekennzeichnet, dass** bei einem Überschreiten der Grenz-Querbeschleunigung (aqG) für einen zukünftigen Zeitpunkt (tZ) als Stabilitätsgröße (GA23, GB23) eine zweite Antriebs-Stabilitätsgröße (GA23) und/oder eine dritte Brems-Stabilitätsgröße (GB23) derartig erzeugt und ausgegeben wird, dass bei einer automatisierten Ansteuerung des Fahrzeuges (1) (ST5) in Abhängigkeit der dritten Brems-Stabilitätsgröße (GB23) und/oder der zweiten Antriebs-Stabilitätsgröße (GA23) die Querbeschleunigung (aq) des Fahrzeuges (1) auf die Grenz-Querbeschleunigung (aqG) sinkt oder diese unterschreitet.

13. Verfahren nach einem der vorhergehenden Ansprüche, **dadurch gekennzeichnet, dass** die Soll-Trajektorie (TS) in Abhängigkeit eines Stabilitäts-Indikators (SI) angepasst wird, wobei der Stabilitäts-Indikator (SI) in Abhängigkeit von einer aktuellen Fahrzeug-Ist-Dynamik (FDIst) sowie der aktuellen Soll-Trajektorie (TS) zeitabhängig angibt, wie wahrscheinlich ein ungewollter Fahrzustand (Z1u) zu einem Zeitpunkt (t) zwischen einem aktuellen Zeitpunkt (t0) und dem zukünftigen Zeitpunkt (tZ) ist.

14. Verfahren nach Anspruch 13, **dadurch gekennzeichnet, dass** der Stabilitäts-Indikator (SI) gebildet wird in Abhängigkeit mindestens eines Merkmals ausgewählt aus der Gruppe bestehend aus:
einer Knickwinkel-Abweichung (dKW) zwischen einem aktuellen Ist-Knickwinkel (KWIst) und einem Soll-Knickwinkel (KWSoll), einer Gierraten-Abweichung (dG) zwischen einer Ist-Gierrate (GIst) und einer Soll-Gierrate (GSoll), dem Überschreiten einer Grenz-Querbeschleunigung (aqG), einem Radschlupf (s1f) der einzelnen Räder (1f) des Fahrzeuges (1), dem Vorliegen eines ABS-Eingriffes (EABS),
dem Vorliegen eines ESC-Eingriffes (EESC) und/oder einer Beladungsinformation (BI).

15. Verfahren nach einem der vorhergehenden Ansprüche, **dadurch gekennzeichnet, dass** das automatisierte Ansteuern des Fahrzeuges (1) (ST5) in Abhängigkeit von erzeugten Stabilitätsgrößen (GA21, GA23, GB21, GB23, GBL, GL21, GLK) derartig erfolgt, dass das Antriebssystem (7) und/oder das Bremssystem (8) und/oder das Lenksystem (9) des Fahrzeuges (1)
- ausschließlich mit den erzeugten Stabilitätsgrößen (GA21, GA23, GB21, GB23, GBL, GL21, GLK) angesteuert wird, oder
- die Stellgrößen (GA10, GB10, GL10) in Abhängigkeit der erzeugten Stabilitätsgrößen (GA21, GA23, GB21, GB23, GBL, GL21, GLK) angepasst werden.

16. Verfahren nach einem der vorhergehenden Ansprüche, **dadurch gekennzeichnet, dass** die Soll-Trajektorie (TS) durch Soll-Positionen (PSoll) und Soll-Rotationen (PhiSoll) als geometrische Trajektorien-Größen (kG) charakterisiert ist.

17. Verfahren nach einem der vorhergehenden Ansprüche, **dadurch gekennzeichnet, dass**
- das Ermitteln einer Ist-Abweichung (dTS) des Fahrzeuges (1) von der Soll-Trajektorie (TS) (ST1) in einer VD-Einheit (3a) durchgeführt wird;
- das Erzeugen von Stellgrößen (GA10, GB10, GL10) in Abhängigkeit der ermittelten Ist-Abweichung (dTS) (ST3) in einer ersten Bewegungs-Regeleinheit (10) durchgeführt wird; und
- das Ermitteln, ob für einen zukünftigen Zeitpunkt (tZ) ein ungewollter Fahrzustand (Z1u) vorliegt (STS2, STS3, STS4, STS5) in einer zweiten Bewegungs-Regeleinheit (20) durchgeführt wird, wobei
- das Erzeugen der Stellgrößen (GA10, GB10, GL10) in der ersten Bewegungs-Regeleinheit (10) unabhängig von dem Ermitteln des ungewollten Fahrzustandes (Z1u) in der zweiten Bewegungs-Regeleinheit (20) durchgeführt wird und/oder
- das Ermitteln einer Ist-Abweichung (dTS) in der VD-Einheit (3a) unabhängig von dem Ermitteln des ungewollten Fahrzustandes (Z1u) in der zweiten Bewegungs-Regeleinheit (20) durchgeführt wird.

18. Fahrt-Steuereinheit (3), insbesondere zur Durchführung eines Verfahrens nach einem der vorhergehenden Ansprüche, wobei die Fahrt-Steuereinheit (3) mindestens aufweist:
- eine VD-Einheit (3a) zur Festlegung einer Soll-Trajektorie (TS), wobei die Soll-Trajektorie (TS) durch geometrische Trajektorien-Größen (kG) charakterisiert ist, und zur Ausgabe einer Ist-Abweichung (dTS), wenn das Fahrzeug (1) von der Soll-Trajektorie (TS) abweicht,
- eine erste Bewegungs-Regeleinheit (10), wobei die erste Bewegungs-Regeleinheit (10) ausgebildet ist, in Abhängigkeit der Ist-Abweichung (dTS) Stellgrößen (GA10, GB10, GL10) derartig zu erzeugen, dass sich das Fahrzeug (1) bei einer automatisierten Ansteuerung eines Antriebssystems (7) und/oder eines Bremssystems (8) und/oder eines Lenksystems (9) des Fahrzeuges (1) in Abhängigkeit der erzeugten Stellgrößen (GA10, GB10, GL10) an die Soll-Trajektorie (TS) annähert, wenn das Fahrzeug (1) von der Soll-Trajektorie (TS) abweicht,
- eine zweite Bewegungs-Regeleinheit (20), wobei die zweite Bewegungs-Regeleinheit (20) ausgebildet ist, zu ermitteln, ob für einen zukünftigen Zeitpunkt (tZ) ein ungewollter Fahrzustand (Z1u) vorliegt, wenn sich das Fahrzeug (1) in Abhängigkeit der erzeugten Stellgrößen (GA10, GB10, GL10) an die Soll-Trajektorie (TS) annähert, wobei der ungewollte Fahrzustand (Z1u) aus der vorgegebenen Soll-Trajektorie (TS) in Abhängigkeit der geometrischen Trajektorien-Größen (kG) ermittelbar ist, wobei
-- weiterhin mindestens eine Verknüpfungseinheit (13A, 13B, 13L) vorgesehen ist, wobei die mindestens eine Verknüpfungseinheit (13A, 13B, 13L) ausgebildet ist, ein Verknüpfungs-Signal (SVA, SVB, SVL) zum automatisierten Ansteuern des Antriebssystems (7) und/oder des Bremssystems (8) und/oder des Lenksystems (9) des Fahrzeuges (1) zu erzeugen und auszugeben, wobei das Verknüpfungs-Signal (SVA, SVB, SVL) bei Vorliegen eines ungewollten Fahrzustandes (Z1u) in Abhängigkeit von erzeugten Stabilitätsgrößen (GA21, GA23, GB21, GB23, GBL, GL21, GLK) erzeugt und ausgegeben werden kann, und/oder
-- die VD-Einheit (3a) ferner ausgebildet ist, die Soll-Trajektorie (TS) anzupassen, wenn ein ungewollter Fahrzustand (Z1u) vorliegt.

19. Fahrt-Steuereinheit (3) nach Anspruch 18, **dadurch gekennzeichnet, dass** dem Antriebssystem (6) und/oder dem Bremssystem (7) und/oder dem Lenksystem (8) jeweils eine Verknüpfungseinheit (13A, 13B, 13L) zugeordnet ist, wobei das Antriebssystem (6) mit einem Antriebs-Verknüpfungs-Signal (SVA), das Bremssystem (7) mit einem Brems-Verknüpfungs-Signal (SVB) und das Lenksystem (8) mit einem Lenk-Verknüpfungs-Signal (SVL) automatisiert angesteuert werden kann.

20. Fahrt-Steuereinheit (3) nach Anspruch 18 oder 19, **dadurch gekennzeichnet, dass**
- die erste Bewegungs-Regeleinheit (10) und/oder die zweite Bewegungs-Regeleinheit (20) in der VD-Einheit (3a) integriert sind; und/oder
- die erste Bewegungs-Regeleinheit (10) und die zweite Bewegungs-Regeleinheit (20) zusammengefasst sind; oder
- zumindest die zweite Bewegungs-Regeleinheit (20) getrennt von der VD-Einheit (3a) und der ersten Bewegungs-Regeleinheit (10) ausgeführt ist.

21. Fahrt-Steuereinheit (3) nach einem der Ansprüche 18 bis 20, **dadurch gekennzeichnet, dass** die zweite Bewegungs-Regeleinheit (20) einen Gierraten-Regler (21) aufweist, wobei der Gierraten-Regler (21) ausgebildet ist,
- auf das Vorliegen eines ungewollten Fahrzustandes (Z1u) zu schließen, wenn eine Gierraten-Abweichung (dG) zwischen einer Soll-Gierrate (GSoll) und einer Ist-Gierrate (GIst) zu dem aktuellen Zeitpunkt (t0) und/oder für einen zukünftigen Zeitpunkt (tZ) einen Abweichungs-Grenzwert (dGW) überschreitet, wobei die Soll-Gierrate (GSoll) zu dem aktuellen Zeitpunkt (t0) und/oder für einen zukünftigen Zeitpunkt (tZ) aus der vorgegebenen Soll-Trajektorie (TS) in Abhängigkeit der geometrischen Trajektorien-Größen (kG) folgt, sowie
- eine Stabilitätsgröße (GA21, GB21, GBL, GL21) in Abhängigkeit der Gierraten-Abweichung (dG) bei Überschreiten des Abweichungs-Grenzwertes (dGW) zu ermitteln und auszugeben.

22. Fahrt-Steuereinheit (3) nach einem der Ansprüche 18 bis 21, **dadurch gekennzeichnet, dass** die zweite Bewegungs-Regeleinheit (20) eine RSC-Einheit (23) aufweist, wobei die RSC-Einheit (23) ausgebildet ist,
- auf das Vorliegen eines ungewollten Fahrzustandes (Z1u) zu schließen, wenn eine Querbeschleunigung (aq) des Fahrzeuges (1) für einen zukünftigen Zeitpunkt (tZ) eine Grenz-Querbeschleunigung (aqG) überschreitet, sowie
- bei Überschreiten der Grenz-Querbeschleunigung (aqG) eine Stabilitätsgröße (GA23, GB23) zu ermitteln und auszugeben.

23. Fahrt-Steuereinheit (3) nach einem der Ansprüche 18 bis 22, **dadurch gekennzeichnet, dass** die zweite Bewegungs-Regeleinheit (20) einen Stabilisierungs-Monitor (24) aufweist, wobei der Stabilisierungs-Monitor (24) ausgebildet ist, einen Stabilitäts-Indikator (SI) in Abhängigkeit einer aktuellen Fahrzeug-Ist-Dynamik (FDIst) sowie der aktuellen Soll-Trajektorie (TS) zu bilden, wobei der Stabilitäts-Indikator (SI) zeitabhängig angibt, wie wahrscheinlich ein ungewollter Fahrzustand (Z1u) zu einem Zeitpunkt (t) zwischen dem aktuellen Zeitpunkt (t0) und dem zukünftigen Zeitpunkt (tZ) ist.

24. Fahrt-Steuereinheit (3) nach Anspruch 23, **dadurch gekennzeichnet, dass** die VD-Einheit (3a) ausgebildet ist, die Soll-Trajektorie (TS) in Abhängigkeit des gebildeten Stabilitäts-Indikators (SI) anzupassen.

25. Fahrzeug (1) mit einer Fahrt-Steuereinheit (3) nach einem der Ansprüche 18 bis 24 zum automatisierten Führen des Fahrzeuges (1) entlang einer vorgegebenen Soll-Trajektorie (TS) oder einer angepassten Soll-Trajektorie (TSa).

## Claims

1. Method for automated guidance of a vehicle (1) along a predetermined target trajectory (TS) with an actual speed (vIst), wherein the target trajectory (TS) is **characterized by** geometric trajectory variables (kG), the method comprising at least the following steps:
- determining an actual deviation (dTS) of the vehicle (1) from the target trajectory (TS) (ST1);
- outputting the determined actual deviation (dTS) to a control unit (10, 20, 30), and generating manipulated variables (GA10, GB10, GL10) in the control unit (10, 20, 30) based on the determined actual deviation (dTS) (ST3), such that the vehicle (1) moves closer to the target trajectory (TS) during automated control of a drive system (7) and/or a braking system (8) and/or a steering system (9) of the vehicle (1) on the basis of the generated manipulated variables (GA10, GB10, GL10), if the vehicle (1) deviates from the target trajectory (TS), **characterized by** the additional steps of;
- determining, in the control unit (10, 20, 30), whether an undesirable driving state (Z1u) with respect to stability is present for a future point in time (tZ) when the vehicle (1) moves closer to the target trajectory (TS) on the basis of the generated manipulated variables (GA10, GB10, GL10), wherein the undesirable driving state (Z1u) is determined from the predetermined target trajectory (TS) based on the geometric trajectory variables (kG) (STS2, STS3, STS4, STS5); and
- if the presence of the undesirable driving state (Z1u) is identified for a future point in time (tZ),
-- controlling the vehicle (1) in an automated manner (ST5) based on stability variables (GA21, GA23, GB21, GB23, GBL, GL21, GLK) generated in the control unit (10, 20, 30), and/or
-- adjusting the received target trajectory (TS) (STS5).

2. Method according to claim 1, **characterized in that** determining whether an undesirable driving state (Z1u) is present for a future point in time (tZ) is carried out additionally based on vehicle information (IF) about the vehicle (1) and/or based on an actual vehicle dynamic (FDIst) of the vehicle (1) and/or on target requirements (AS11, AS12) for controlling the drive system (7) and/or the braking system (8) and/or the steering system (9).

3. Method according to claim 2, **characterized in that** the target requirements (AS11, AS12) are determined based on the actual deviation (dTS), wherein
- a position (P1) and/or actual rotation (Philst) of the vehicle (1) that deviates from the target trajectory (TS) in the direction of travel (FR) of the vehicle (1) is corrected by means of longitudinal target requirements (AS11), and
- a position (P1) and/or actual rotation (Philst) of the vehicle (1) that deviates from the target trajectory (TS) perpendicularly to the direction of travel (FR) is corrected by means of lateral target requirements (AS12).

4. Method according to any of the preceding claims, **characterized in that** a drive manipulated variable (GA10) and/or a braking manipulated variable (GB10) and/or a steering manipulated variable (GL10) are determined as manipulated variables (GA10, GB10, GL10) based on the actual deviation (dTS), wherein
- the drive system (6) of the vehicle (1) can be controlled in an automated manner based on the drive manipulated variable (GA10), and
- the braking system (7) of the vehicle (1) can be controlled in an automated manner based on the braking manipulated variable (GB10), and
- the steering system (8) of the vehicle (1) can be controlled in an automated manner based on the steering manipulated variable (GL10),
in order to move the position (P1) and/or actual rotation (Philst) of the vehicle (1) closer to the target trajectory (TS).

5. Method according to any of the preceding claims, **characterized in that** the presence of an undesirable driving state (Z1u) is determined if it follows from the predetermined target trajectory (TS), based on the geometric trajectory variables (kG), that the vehicle (1) is at risk of being unstable at a future point in time (tZ).

6. Method according to any of the preceding claims, **characterized in that** the presence of an undesirable driving state (Z1u) is determined if a yaw rate deviation (dG) between a target yaw rate (GSoll) and an actual yaw rate (GIst) for a future point in time (tZ) exceeds a deviation limit value (dGW), wherein the target yaw rate (GSoll) for a future point in time (tZ) follows indirectly or directly from the predetermined target trajectory (TS) based on the geometric trajectory variables (kG).

7. Method according to claim 6, **characterized in that** if the deviation limit value (dGW) is exceeded based on the yaw rate deviation (dG), as a stability variable (GA21, GB21),
- a first drive stability variable (GA21) for limiting the actual speed (vIst) of the vehicle (1) and/or
- a first braking stability variable (GB21) for reducing the actual speed (vIst) of the vehicle (1)
is generated and output such that, during automated control of the vehicle (1) (ST5), based on the first drive stability variable (GA21) and/or the first brake stability variable (GB21), the actual speed (vIst) of the vehicle (1) does not exceed a predetermined limit speed (vGrenz) (STS2.1).

8. Method according to claim 6 or 7, **characterized in that** if the deviation limit value (dGW) is exceeded based on the yaw rate deviation (dG), as a stability variable (GBL, GL21),
- a second braking stability variable (GBL) for braking individual wheels of the vehicle (1) and/or
- a first steering stability variable (GL21) for steering the vehicle (1) is generated and output such that, during automated control of the vehicle (1) (ST5), based on the second braking stability variable (GBL) and/or the first steering stability variable (GL21), the actual yaw rate (GIst) moves closer to the target yaw rate (GSoll) (STS2.2).

9. Method according to any of the preceding claims, **characterized in that** a second steering stability variable (GLK) is generated and output to prevent an undesirable driving state (Z1u), wherein the second steering stability variable (GLK) is generated based on
- the actual speed (vIst) of the vehicle (1) and/or a target curve radius (RSoll) derived from the target trajectory (TS) (STS3.1), and/or
- a braking yaw torque (JB), wherein the braking yaw torque (JB) is determined based on wheel slips (s1f) at wheels (1f) of the vehicle (1) that act differently on each side (STS3.2), and/or - an angle of inclination (NIst) of the vehicle (1) relative to the roadway (2), taking into account a current vehicle mass (M1) (ST3.3).

10. Method according to any of the preceding claims, **characterized in that** the presence of an undesirable driving state (Z1u) is determined if a lateral acceleration (aq) of the vehicle (1) exceeds a limit lateral acceleration (aqG) for a future point in time (tZ) (STS4).

11. Method according to claim 10, **characterized in that** the lateral acceleration (aq) for the future point in time (tZ) is estimated from the predetermined target trajectory (TS) based on the geometric trajectory variables (kG).

12. Method according to claim 10 or 11, **characterized in that** if the limit lateral acceleration (aqG) is exceeded for a future point in time (tZ), a second drive stability variable (GA23) and/or a third brake stability variable (GB23) is generated and output as a stability variable (GA23, GB23) such that, during automated control of the vehicle (1) (ST5), the lateral acceleration (aq) of the vehicle (1) drops to or falls below the limit lateral acceleration (aqG) based on the third brake stability variable (GB23) and/or the second drive stability variable (GA23).

13. Method according to any of the preceding claims, **characterized in that** the target trajectory (TS) is adjusted based on a stability indicator (SI), wherein the stability indicator (SI) indicates, in a time-dependent manner, how likely an undesirable driving state (Z1u) is at a point in time (t) between a current point in time (t0) and the future point in time (tZ), based on a current actual vehicle dynamic (FDIst) and the current target trajectory (TS).

14. Method according to claim 13, **characterized in that** the stability indicator (SI) is formed based on at least one feature selected from the group consisting of:
an articulation angle deviation (dKW) between a current actual articulation angle (KWIst) and a target articulation angle (KWSoll), a yaw rate deviation (dG) between an actual yaw rate (GIst) and a target yaw rate (GSoll), the exceeding of a limit lateral acceleration (aqG), a wheel slip (s1f) of the individual wheels (1f) of the vehicle (1), the presence of an ABS intervention (EABS), the presence of an ESC intervention (EESC) and/or load information (BI).

15. Method according to any of the preceding claims, **characterized in that** the automated control of the vehicle (1) (ST5) based on generated stability variables (GA21, GA23, GB21, GB23, GBL, GL21, GLK) is carried out in such a way that the drive system (7) and/or the braking system (8) and/or the steering system (9) of the vehicle (1)
- is controlled exclusively using the generated stability variables (GA21, GA23, GB21, GB23, GBL, GL21, GLK), or
- the manipulated variables (GA10, GB10, GL10) are adjusted based on the generated stability variables (GA21, GA23, GB21, GB23, GBL, GL21, GLK).

16. Method according to any of the preceding claims, **characterized in that** the target trajectory (TS) is **characterized by** target positions (PSoll) and target rotations (PhiSoll) as geometric trajectory variables (kG).

17. Method according to any of the preceding claims, **characterized in that**
- determining an actual deviation (dTS) of the vehicle (1) from the target trajectory (TS) (ST1) is carried out in a VD unit (3a);
- generating manipulated variables (GA10, GB10, GL10) based on the determined actual deviation (dTS) (ST3) is carried out in a first movement control unit (10); and
- determining whether an undesirable driving state (Z1u) is present for a future point in time (tZ) (STS2, STS3, STS4, STS5) is carried out in a second movement control unit (20), wherein
- generating the manipulated variables (GA10, GB10, GL10) in the first movement control unit (10) is carried out independently of determining the undesirable driving state (Z1u) in the second movement control unit (20), and/or
- determining an actual deviation (dTS) in the VD unit (3a) is carried out independently of determining the undesirable driving state (Z1u) in the second movement control unit (20).

18. Driving control unit (3), in particular for carrying out a method according to any of the preceding claims, wherein the driving control unit (3) has at least:
- a VD unit (3a) for identifying a target trajectory (TS), wherein the target trajectory (TS) is **characterized by** geometric trajectory variables (kG), and for outputting an actual deviation (dTS) if the vehicle (1) deviates from the target trajectory (TS),
- a first movement control unit (10), wherein the first movement control unit (10) is designed to generate manipulated variables (GA10, GB10, GL10) based on the actual deviation (dTS), such that the vehicle (1) moves closer to the target trajectory (TS) during automated control of a drive system (7) and/or a braking system (8) and/or a steering system (9) of the vehicle (1) on the basis of the generated manipulated variables (GA10, GB10, GL10) if the vehicle (1) deviates from the target trajectory (TS)
- a second movement control unit (20), wherein the second movement control unit (20) is designed to determine whether an undesirable driving state (Z1u) is present for a future point in time (tZ) when the vehicle (1) moves closer to the target trajectory (TS) on the basis of the generated manipulated variables (GA10, GB10, GL10), wherein the undesirable driving state (Z1u) can be determined from the predetermined target trajectory (TS) based on the geometric trajectory variables (kG), wherein
-- furthermore, at least one logic unit (13A, 13B, 13L) is provided, wherein the at least one logic unit (13A, 13B, 13L) is designed to generate and output a logic signal (SVA, SVB, SVL) for automated control of the drive system (7) and/or the braking system (8) and/or the steering system (9) of the vehicle (1), wherein the logic signal (SVA, SVB, SVL) can be generated and output in the presence of an undesirable driving state (Z1u) based on generated stability variables (GA21, GA23, GB21, GB23, GBL, GL21, GLK), and/or
-- the VD unit (3a) is further designed to adjust the target trajectory (TS) if an undesirable driving state (Z1 u) is present.

19. Driving control unit (3) according to claim 18, **characterized in that** a logic unit (13A, 13B, 13L) is associated with each of the drive system (6) and/or the braking system (7) and/or the steering system (8), wherein the drive system (6) can be controlled in an automated manner by a drive logic signal (SVA), the braking system (7) by a braking logic signal (SVB) and the steering system (8) by a steering logic signal (SVL).

20. Driving control unit (3) according to claim 18 or 19, **characterized in that**
- the first movement control unit (10) and/or the second movement control unit (20) are integrated in the VD unit (3a); and/or
- the first movement control unit (10) and the second movement control unit (20) are combined; or
- at least the second movement control unit (20) is separate from the VD unit (3a) and the first movement control unit (10).

21. Driving control unit (3) according to any of claims 18 to 20, **characterized in that** the second movement control unit (20) has a yaw rate controller (21), wherein the yaw rate controller (21) is designed
- to infer that an undesirable driving state (Z1u) is present if a yaw rate deviation (dG) between a target yaw rate (GSoll) and an actual yaw rate (GIst) at the current point in time (t0) and/or for a future point in time (tZ) exceeds a deviation limit value (dGW), wherein the target yaw rate (GSoll) at the current point in time (t0) and/or for a future point in time (tZ) follows from the predetermined target trajectory (TS) based on the geometric trajectory variables (kG), and
- to determine and output a stability variable (GA21, GB21, GBL, GL21) based on the yaw rate deviation (dG) if the deviation limit value (dGW) is exceeded.

22. Driving control unit (3) according to any of claims 18 to 21, **characterized in that** the second movement control unit (20) has an RSC unit (23), wherein the RSC unit (23) is designed
- to infer that an undesirable driving state (Z1u) is present if a lateral acceleration (aq) of the vehicle (1) exceeds a limit lateral acceleration (aqG) for a future point in time (tZ), and
- to determine and output a stability variable (GA23, GB23) if the limit lateral acceleration (aqG) is exceeded.

23. Driving control unit (3) according to any of claims 18 to 22, **characterized in that** the second movement control unit (20) has a stabilization monitor (24), wherein the stabilization monitor (24) is designed to form a stability indicator (SI) based on a current actual vehicle dynamic (FDIst) and the current target trajectory (TS), wherein the stability indicator (SI) indicates, in a time-dependent manner, how likely an undesirable driving state (Z1u) is at a point in time (t) between the current point in time (t0) and the future point in time (tZ).

24. Driving control unit (3) according to claim 23, **characterized in that** the VD unit (3a) is designed to adjust the target trajectory (TS) based on the formed stability indicator (SI).

25. Vehicle (1) comprising a driving control unit (3) according to any of claims 18 to 24 for automated guidance of the vehicle (1) along a predetermined target trajectory (TS) or an adjusted target trajectory (TSa).

## Revendications

1. Procédé permettant le guidage automatisé d'un véhicule (1) le long d'une trajectoire de consigne (TS) prédéfinie avec une vitesse réelle (vIst), dans lequel la trajectoire de consigne (TS) est **caractérisée par** des variables géométriques de trajectoire (kG), comportant au moins les étapes suivantes :
- détermination d'un écart réel (dTS) du véhicule (1) par rapport à la trajectoire de consigne (TS) (ST1) ;
- émission de l'écart réel (dTS) déterminé à une unité de commande (10, 20, 30) et génération de variables de réglage (GA10, GB10, GL10) dans l'unité de commande (10, 20, 30) en fonction de l'écart réel (dTS) (ST3) déterminé de telle sorte, que le véhicule (1) se rapproche de la trajectoire de consigne (TS) lors d'une commande automatisée d'un système d'entraînement (7) et/ou d'un système de freinage (8) et/ou d'un système de direction (9) du véhicule (1) en fonction des variables de réglage (GA10, GB10, GL10) générées, lorsque le véhicule (1) s'écarte de la trajectoire de consigne (TS), **caractérisé par** les étapes supplémentaires ;
- détermination dans l'unité de commande (10, 20, 30) établissant si, pour un instant futur (tZ), il existe un état de conduite indésirable (Z1u) en termes de stabilité, lorsque le véhicule (1) s'approche de la trajectoire de consigne (TS) en fonction des variables de réglage (GA10, GB10, GL10) générées, dans lequel l'état de conduite indésirable (Z1u) est déterminé à partir de la trajectoire de consigne (TS) prédéfinie en fonction des variables géométriques de trajectoire (kG) (STS2, STS3, STS4, STS5) ; et
- lorsque l'existence de l'état de conduite indésirable (Z1u) est établie pour un instant futur (tZ)
-- commande automatisée du véhicule (1) (ST5) en fonction de variables de stabilité (GA21, GA23, GB21, GB23, GBL, GL21, GLK) générées dans l'unité de commande (10, 20, 30) et/ou
-- adaptation de la trajectoire de consigne (TS) reçue (STS5).

2. Procédé selon la revendication 1, **caractérisé en ce que** la détermination de la présence ou non d'un état de conduite indésirable (Z1u) pour un instant futur (tZ) s'effectue en complément en fonction d'informations de véhicule (IF) sur le véhicule (1) et/ou d'une dynamique réelle de véhicule (FDIst) du véhicule (1) et/ou d'exigences de consigne (AS11, AS12) pour la commande du système d'entraînement (7) et/ou du système de freinage (8) et/ou du système de direction (9).

3. Procédé selon la revendication 2, **caractérisé en ce que** les exigences de consigne (AS11, AS12) sont déterminées en fonction de l'écart réel (dTS), dans lequel
- par l'intermédiaire d'exigences de consigne longitudinales (AS11), une position (P1) et/ou une rotation réelle (Philst) du véhicule (1) s'écartant dans le sens de la marche (FR) du véhicule (1) de la trajectoire de consigne (TS) sont corrigées, et
- par l'intermédiaire d'exigences de consigne latérales (AS12), une position (P1) et/ou une rotation réelle (Philst) du véhicule (1) s'écartant perpendiculairement au sens de marche (FR) de la trajectoire de consigne (TS) sont corrigées.

4. Procédé selon l'une des revendications précédentes,
**caractérisé en ce que,** comme variables de réglage (GA10, GB10, GL10), en fonction de l'écart réel (dTS), une variable de réglage d'entraînement (GA10) et/ou une variable de réglage de freinage (GB10) et/ou une variable de réglage de direction (GL10) sont déterminées, dans lequel
- le système d'entraînement (6) du véhicule (1) peut être commandé de manière automatisée en fonction de la variable de réglage d'entraînement (GA10) et
- le système de freinage (7) du véhicule (1) peut être commandé de manière automatisée en fonction de la variable de réglage de freinage (GB10) et
- le système de direction (8) du véhicule (1) peut être commandé de manière automatisée en fonction de la variable de réglage de direction (GL10)
afin de rapprocher la position (P1) et/ou la rotation réelle (Philst) du véhicule (1) de la trajectoire de consigne (TS).

5. Procédé selon l'une des revendications précédentes,
**caractérisé en ce que** l'existence d'un état de conduite indésirable (Z1u) est déterminée lorsqu'il résulte de la trajectoire de consigne (TS) prédéfinie, en fonction des variables géométriques de trajectoire (kG), que le véhicule (1) risque de se trouver dans un état instable pour un instant futur (tZ).

6. Procédé selon l'une des revendications précédentes,
**caractérisé en ce que** la présence d'un état de conduite indésirable (Z1u) est déterminée lorsqu'un écart de taux de lacet (dG) entre un taux de lacet de consigne (GSoll) et un taux de lacet réel (GIst) pour un instant futur (tZ) dépasse une valeur limite d'écart (dGW), dans lequel le taux de lacet de consigne (GSoll) pour un instant futur (tZ) découle directement ou indirectement de la trajectoire de consigne (TS) prédéfinie en fonction des variables géométriques de trajectoire (kG).

7. Procédé selon la revendication 6, **caractérisé en ce que,** en cas de dépassement de la valeur limite d'écart (dGW) en fonction de l'écart de taux de lacet (dG), en tant que variable de stabilité (GA21, GB21)
- une première variable de stabilité d'entraînement (GA21) pour la limitation de la vitesse réelle (vIst) du véhicule (1) et/ou
- une première variable de stabilité de freinage (GB21) pour la réduction de la vitesse réelle (vIst) du véhicule (1)
sont générées et émises de telle sorte que, lors d'une commande automatisée du véhicule (1) (ST5) en fonction de la première variable de stabilité d'entraînement (GA21) et/ou de la première variable de stabilité de freinage (GB21), la vitesse réelle (vIst) du véhicule (1) ne dépasse pas une vitesse limite (vGrenz) prédéfinie (STS2.1).

8. Procédé selon la revendication 6 ou 7, **caractérisé en ce que,** en cas de dépassement de la valeur limite d'écart (dGW) en fonction de l'écart de taux de lacet (dG), en tant que variable de stabilité (GBL, GL21)
- une deuxième variable de stabilité de freinage (GBL) pour le freinage du véhicule (1) roue par roue et/ou
- une première variable de stabilité de direction (GL21) pour la direction du véhicule (1)
sont générées et émises de telle sorte que, lors d'une commande automatisée du véhicule (1) (ST5) en fonction de la deuxième variable de stabilité de freinage (GBL) et/ou de la première variable de stabilité de direction (GL21) (STS2.2), le taux de lacet réel (GIst) se rapproche du taux de lacet de consigne (GSoll).

9. Procédé selon l'une des revendications précédentes,
**caractérisé en ce qu'**une deuxième variable de stabilité de direction (GLK) est générée et émise pour l'empêchement d'un état de conduite indésirable (Z1u), dans lequel la deuxième variable de stabilité de direction (GLK) est générée en fonction
- de la vitesse réelle (vIst) du véhicule (1) et/ou d'un rayon de courbe de consigne (RSoll) (STS3.1) dérivé de la trajectoire de consigne (TS), et/ou
- d'un couple de lacet de freinage (JB), dans lequel le couple de lacet de freinage (JB) est déterminé (STS3.2) en fonction de patinages de roues (s1f) agissant différemment d'un côté à l'autre sur des roues (1f) du véhicule (1), et/ou - d'un angle d'inclinaison (NIst) du véhicule (1) par rapport à la voie de circulation (2) en tenant compte d'une masse actuelle de véhicule (M1) (ST3.3).

10. Procédé selon l'une des revendications précédentes,
**caractérisé en ce que** l'existence d'un état de conduite indésirable (Z1u) est déterminée lorsqu'une accélération transversale (aq) du véhicule (1) pour un instant futur (tZ) dépasse (STS4) une accélération transversale limite (aqG).

11. Procédé selon la revendication 10, **caractérisé en ce que** l'accélération transversale (aq) pour l'instant futur (tZ) est estimée à partir de la trajectoire de consigne (TS) prédéfinie en fonction des variables géométriques de trajectoire (kG).

12. Procédé selon la revendication 10 ou 11, **caractérisé en ce que,** en cas de dépassement de l'accélération transversale limite (aqG) pour un instant futur (tZ), une deuxième variable de stabilité d'entraînement (GA23) et/ou une troisième variable de stabilité de freinage (GB23) est générée et émise en tant que variable de stabilité (GA23, GB23) de telle sorte que, lors d'une commande automatisée du véhicule (1) (ST5), en fonction de la troisième variable de stabilité de freinage (GB23) et/ou de la deuxième variable de stabilité d'entraînement (GA23), l'accélération transversale (aq) du véhicule (1) diminue jusqu'à l'accélération transversale limite (aqG) ou passe en dessous de celle-ci.

13. Procédé selon l'une des revendications précédentes,
**caractérisé en ce que** la trajectoire de consigne (TS) est adaptée en fonction d'un indicateur de stabilité (SI), dans lequel l'indicateur de stabilité (SI) indique en fonction du temps, en fonction d'une dynamique réelle de véhicule (FDIst) actuelle ainsi que de la trajectoire de consigne (TS) actuelle, quelle est la probabilité d'un état de conduite indésirable (Z1u) à un instant (t) entre un instant actuel (t0) et l'instant futur (tZ).

14. Procédé selon la revendication 13, **caractérisé en ce que** l'indicateur de stabilité (SI) est formé en fonction d'au moins une caractéristique choisie dans le groupe constitué par :
un écart d'angle d'articulation (dKW) entre un angle d'articulation réel (KWIst) actuel et un angle d'articulation de consigne (KWSoll), un écart de taux de lacet (dG) entre un taux de lacet réel (GIst) et un taux de lacet de consigne (GSoll), le dépassement d'une accélération transversale limite (aqG), un patinage de roue (s1f) des différentes roues (1f) du véhicule (1), la présence d'une intervention de l'ABS (EABS), la présence d'une intervention de l'ESC (EESC) et/ou une information de charge (BI).

15. Procédé selon l'une des revendications précédentes,
**caractérisé en ce que** la commande automatisée du véhicule (1) (ST5) en fonction de variables de stabilité (GA21, GA23, GB21, GB23, GBL, GL21, GLK) générées s'effectue de telle sorte que le système d'entraînement (7) et/ou le système de freinage (8) et/ou le système de direction (9) du véhicule (1)
- sont commandés exclusivement avec les variables de stabilité (GA21, GA23, GB21, GB23, GBL, GL21, GLK) générées, ou
- les variables de réglage (GA10, GB10, GL10) sont adaptées en fonction des variables de stabilité (GA21, GA23, GB21, GB23, GBL, GL21, GLK) générées.

16. Procédé selon l'une des revendications précédentes,
**caractérisé en ce que** la trajectoire de consigne (TS) est **caractérisée par** des positions de consigne (PSoll) et des rotations de consigne (PhiSoll) en tant que variables géométriques de trajectoire (kG).

17. Procédé selon l'une des revendications précédentes,
**caractérisé en ce que**
- la détermination d'un écart réel (dTS) du véhicule (1) par rapport à la trajectoire de consigne (TS) (ST1) est réalisée dans une unité VD (3a) ;
- la génération de variables de réglage (GA10, GB10, GL10) est réalisée en fonction de l'écart réel (dTS) (ST3) déterminé dans une première unité de régulation de mouvement (10) ; et
- la détermination de la présence d'un état de conduite indésirable (Z1u) pour un instant futur (tZ) (STS2, STS3, STS4, STS5) est réalisée dans une seconde unité de régulation de mouvement (20), dans lequel
- la génération des variables de réglage (GA10, GB10, GL10) dans la première unité de régulation de mouvement (10) est réalisée indépendamment de la détermination de l'état de conduite indésirable (Z1u) dans la seconde unité de régulation de mouvement (20) et/ou
- la détermination d'un écart réel (dTS) dans l'unité VD (3a) est réalisée indépendamment de la détermination de l'état de conduite indésirable (Z1u) dans la seconde unité de régulation de mouvement (20).

18. Unité de commande de conduite (3) permettant en particulier la réalisation d'un procédé selon l'une des revendications précédentes, dans laquelle l'unité de commande de conduite (3) présente au moins :
- une unité VD (3a) permettant d'établir une trajectoire de consigne (TS), dans laquelle la trajectoire de consigne (TS) est **caractérisée par** des variables géométriques de trajectoire (kG), et d'émettre un écart réel (dTS) lorsque le véhicule (1) s'écarte de la trajectoire de consigne (TS),
- une première unité de régulation de mouvement (10), dans laquelle la première unité de régulation de mouvement (10) est conçue pour générer des variables de réglage (GA10, GB10, GL10) en fonction de l'écart réel (dTS) de telle sorte que le véhicule (1) se rapproche de la trajectoire de consigne (TS) lors d'une commande automatisée d'un système d'entraînement (7) et/ou d'un système de freinage (8) et/ou d'un système de direction (9) du véhicule (1) en fonction des variables de réglage (GA10, GB10, GL10) générées, lorsque le véhicule (1) s'écarte de la trajectoire de consigne (TS),
- une seconde unité de régulation de mouvement (20), dans laquelle la seconde unité de régulation de mouvement (20) est conçue pour déterminer si, pour un instant futur (tZ), il existe un état de conduite indésirable (Z1u) lorsque le véhicule (1) se rapproche de la trajectoire de consigne (TS) en fonction des variables de réglage (GA10, GB10, GL10) générées, dans laquelle l'état de conduite indésirable (Z1u) peut être déterminé à partir de la trajectoire de consigne (TS) prédéfinie en fonction des variables géométriques de trajectoire (kG), dans laquelle
-- au moins une unité de liaison (13A, 13B, 13L) est en outre prévue, dans laquelle l'au moins une unité de liaison (13A, 13B, 13L) est conçue pour générer et émettre un signal de liaison (SVA, SVB, SVL) pour la commande automatisée du système d'entraînement (7) et/ou du système de freinage (8) et/ou du système de direction (9) du véhicule (1), dans laquelle le signal de liaison (SVA, SVB, SVL) peut être généré et émis en cas de présence d'un état de conduite indésirable (Z1u) en fonction de variables de stabilité (GA21, GA23, GB21, GB23, GBL, GL21, GLK) générées, et/ou
-- l'unité VD (3a) est en outre conçue pour adapter la trajectoire de consigne (TS) lorsqu'un état de conduite indésirable (Z1u) est présent.

19. Unité de commande de conduite (3) selon la revendication 18, **caractérisée en ce qu'**une unité de liaison (13A, 13B, 13L) est respectivement associée au système d'entraînement (6) et/ou au système de freinage (7) et/ou au système de direction (8), dans laquelle le système d'entraînement (6) peut être commandé de manière automatisée avec un signal de liaison d'entraînement (SVA), le système de freinage (7) peut être commandé de manière automatisée avec un signal de liaison de freinage (SVB) et le système de direction (8) peut être commandé de manière automatisée avec un signal de liaison de direction (SVL).

20. Unité de commande de conduite (3) selon la revendication 18 ou 19, **caractérisée en ce que**
- la première unité de régulation de mouvement (10) et/ou la seconde unité de régulation de mouvement (20) sont intégrées dans l'unité VD (3a) ; et/ou
- la première unité de régulation de mouvement (10) et la seconde unité de régulation de mouvement (20) sont combinées ; ou
- au moins la seconde unité de régulation de mouvement (20) est réalisée séparément de l'unité VD (3a) et de la première unité de régulation de mouvement (10).

21. Unité de commande de conduite (3) selon l'une des
revendications 18 à 20, **caractérisée en ce que** la seconde unité de régulation de déplacement (20) présente un régulateur de taux de lacet (21), dans laquelle le régulateur de taux de lacet (21) est conçu,
- pour conclure à la présence d'un état de conduite indésirable (Z1u) lorsqu'un écart de taux de lacet (dG) entre un taux de lacet de consigne (GSoll) et un taux de lacet réel (GIst) à l'instant actuel (t0) et/ou pour un instant futur (tZ) dépasse une valeur limite d'écart (dGW), dans laquelle le taux de lacet de consigne (GSoll) à l'instant actuel (t0) et/ou pour un instant futur (tZ) résulte de la trajectoire de consigne (TS) prédéfinie en fonction des variables géométriques de trajectoire (kG), ainsi que
- pour déterminer et émettre une variable de stabilité (GA21, GB21, GBL, GL21) en fonction de l'écart de taux de lacet (dG) en cas de dépassement de la valeur limite d'écart (dGW).

22. Unité de commande de conduite (3) selon l'une des revendications 18 à 21, **caractérisée en ce que** la seconde unité de régulation de déplacement (20) présente une unité RSC (23), dans laquelle l'unité RSC (23) est conçue,
- pour conclure à la présence d'un état de conduite indésirable (Z1u) lorsqu'une accélération transversale (aq) du véhicule (1) pour un instant futur (tZ) dépasse une accélération transversale limite (aqG), ainsi que
- pour déterminer et émettre une variable de stabilité (GA23, GB23) en cas de dépassement de l'accélération transversale limite (aqG).

23. Unité de commande de conduite (3) selon l'une des revendications 18 à 22, **caractérisée en ce que** la seconde unité de régulation de déplacement (20) présente un moniteur de stabilisation (24), dans laquelle le moniteur de stabilisation (24) est conçu pour former un indicateur de stabilité (SI) en fonction d'une dynamique réelle de véhicule (FDIst) actuelle ainsi que de la trajectoire de consigne (TS) actuelle, dans laquelle l'indicateur de stabilité (SI) indique en fonction du temps quelle est la probabilité d'un état de conduite indésirable (Z1u) à un instant (t) entre l'instant actuel (t0) et l'instant futur (tZ).

24. Unité de commande de conduite (3) selon la revendication 23, **caractérisée en ce que** l'unité VD (3a) est conçue pour adapter la trajectoire de consigne (TS) en fonction de l'indicateur de stabilité (SI) formé.

25. Véhicule (1) comportant une unité de commande de conduite (3) selon l'une des revendications 18 à 24 pour le guidage automatisé du véhicule (1) le long d'une trajectoire de consigne (TS) prédéfinie ou d'une trajectoire de consigne adaptée (TSa).
